# EUROPEAN PATENT APPLICATION

(11) **EP 4 344 271 A1**
(43) Date of publication of application: **27.03.2024**
(21) Application number: 22803995.4
(22) Date of filing: 18.05.2022
(51) Int. Cl.: H04W 8/24

(54) **INFORMATION TRANSMISSION METHOD AND APPARATUS, INFORMATION ACQUISITION METHOD AND APPARATUS, AND COMMUNICATION DEVICE**

(30) Priority: 18.05.2021 CN 202110542421
(71) Applicant: Vivo Mobile Communication Co., Ltd., Dongguan, Guangdong 523863 (CN)
(72) Inventor: CHEN, Li, Dongguan, Guangdong 523863 (CN); PAN, Xueming, Dongguan, Guangdong 523863 (CN)
(74) Representative: Conti, Marco
(86) International application number: PCT/CN2022/093549
(87) International publication number: WO 2022/242675

(57) **Abstract**

This application discloses an information transmission method and apparatus, an information obtaining method and apparatus, and a communication device, and pertains to the field of communication technologies. The method in embodiments of this application includes: reporting, by a terminal, first indication information, where the first indication information is used to indicate at least one of the following: whether being a reduced capability terminal; type identifier information of a terminal; and capability information of a reduced capability terminal.

## Description

### CROSS-REFERENCE TO RELATED APPLICATIONS

This application claims priority to Chinese Patent Application- No. 202110542421.7, filed on May 18, 2021 in China, which is incorporated herein by reference in its entirety.

### TECHNICAL FIELD

This application relates to the field of communication technologies, and in particular, to an information transmission method and apparatus, an information obtaining method and apparatus, and a communication device.

### BACKGROUND

In a 5G system, a reduced capability terminal (Reduced Capability User Equipment, RedCap UE) is introduced. Currently, a type (Type) of a terminal is determined according to parameters such as bandwidth supported by the terminal, the number of antennas, a soft buffer size, or a layer 2 buffer size (L2 buffer size). However, for systems operating on different bands, such reduced capability terminals may behave differently. For example, in a large-bandwidth system, a reduced capability terminal uses lower capabilities than a common terminal to access the system, and a network side treat the reduced capability terminal differently after identifying the reduced capability terminal (for example, serving at a lower priority). However, when system bandwidth is not large (for example, does not exceed a bandwidth capability of the reduced capability terminal), performance of the reduced capability terminal may be no different from that of the common terminal. In this case, if the reduced capability terminal is processed by using a capability of the reduced capability terminal, it is not conducive to improving system performance of the reduced capability terminal.

### SUMMARY

Embodiments of this application provide an information transmission method and apparatus, an information obtaining method and apparatus, and a communication device, to resolve a problem of how to improve system performance of a reduced capability terminal.

According to a first aspect, an information transmission method is provided, including:
reporting, by a terminal, first indication information, where the first indication information is used to indicate at least one of the following:
whether being a reduced capability terminal;
type identifier information of a terminal; and
capability information of a reduced capability terminal.

According to a second aspect, an information obtaining method is provided, including:
obtaining, by a network side device, first indication information, where the first indication information is used to indicate at least one of the following:
whether being a reduced capability terminal;
type identifier information of a terminal; and
capability information of a reduced capability terminal.

According to a third aspect, an information transmission apparatus is provided, including:
a first reporting module, configured to report first indication information, where the first indication information is used to indicate at least one of the following:
whether being a reduced capability terminal;
type identifier information of a terminal; and
capability information of a reduced capability terminal.

According to a fourth aspect, an information obtaining apparatus is provided, including:
a first obtaining module, configured to obtain first indication information, where the first indication information is used to indicate at least one of the following:
whether being a reduced capability terminal;
type identifier information of a terminal; and
capability information of a reduced capability terminal.

According to a fifth aspect, a terminal is provided. The terminal includes a processor, a memory, and a program or an instruction that is stored in the memory and that can be run on the processor, where the program or the instruction is executed by the processor to implement the steps of the method in the first aspect.

According to a sixth aspect, a terminal is provided, including a processor and a communication interface, where the communication interface is configured to report first indication information, where the first indication information is used to indicate at least one of the following:
whether being a reduced capability terminal;
type identifier information of a terminal; and
capability information of a reduced capability terminal.

According to a seventh aspect, a network side device is provided. The network side device includes a processor, a memory, and a program or an instruction that is stored in the memory and that can be run on the processor, where the program or the instruction is executed by the processor to implement the steps of the method in the second aspect.

According to an eighth aspect, a network side device is provided, including a processor and a communication interface, where the communication interface is configured to obtain first indication information, where the first indication information is used to indicate at least one of the following:
whether being a reduced capability terminal;
type identifier information of a terminal; and
capability information of a reduced capability terminal.

According to a ninth aspect, a readable storage medium is provided. The readable storage medium stores a program or an instruction, and when the program or the instruction is executed by a processor, the steps of the method in the first aspect or the steps of the method in the second aspect are implemented.

According to a tenth aspect, a chip is provided. The chip includes a processor and a communication interface, the communication interface is coupled to the processor, and the processor is configured to run a program or an instruction to implement the method in the first aspect or the method in the second aspect.

According to an eleventh aspect, a computer program product is provided, where the computer program product is stored in a non-transient storage medium, and the computer program product is executed by at least one processor to implement the steps of the method in the first aspect or the second aspect.

According to a twelfth aspect, a communication device is provided, configured to perform the method in the first aspect, or the method in the second aspect.

In the embodiments of this application, the terminal reports the first indication information, where the first indication information indicates whether the terminal is a reduced capability terminal. In the embodiments of this application, the terminal may correspond to different terminal types in different deployment scenes, that is, in some specific deployment scenes, it may be reported, based on the first indication information, that the terminal type of the terminal is not a reduced capability terminal, thereby improving performance of a reduced capability terminal in different deployment scenes.

### BRIEF DESCRIPTION OF DRAWINGS

FIG. 1 is a structural diagram of a communication system to which the embodiments of this application can be applied;
FIG. 2 is a schematic flowchart of an information transmission method according to an embodiment of this application;
FIG. 3 is a schematic flowchart of an information obtaining method according to an embodiment of this application;
FIG. 4 is a schematic diagram of modules of an information transmission apparatus according to an embodiment of this application;
FIG. 5 is a structural block diagram of a communication device according to an embodiment of this application;
FIG. 6 is a structural block diagram of a terminal according to an embodiment of this application;
FIG. 7 is a schematic diagram of modules of an information obtaining apparatus according to an embodiment of this application; and
FIG. 8 is a structural block diagram of a network side device according to an embodiment of this application.

### DESCRIPTION OF EMBODIMENTS

The following clearly describes the technical solutions in the embodiments of this application with reference to the accompanying drawings in the embodiments of this application. Apparently, the described embodiments are some but not all of the embodiments of this application. All other embodiments obtained by a person of ordinary skill in the art based on the embodiments of this application shall fall within the protection scope of this application.

In the specification and claims of this application, the terms "first", "second", and the like are intended to distinguish between similar objects but do not describe a specific order or sequence. It should be understood that, the terms used in such a way is interchangeable in proper circumstances, so that the embodiments of this application can be implemented in an order other than the order illustrated or described herein. Objects classified by "first" and "second" are usually of a same type, and the number of objects is not limited. For example, there may be one or more first objects. In addition, in the specification and the claims, "and/or" represents at least one of connected objects, and a character "/" generally represents an "or" relationship between associated objects.

It should be noted that, the technologies described in the embodiments of this application are not limited to a Long Term Evolution (Long Term Evolution, LTE)/LTE-Advanced (LTE-Advanced, LTE-A) system, and can also be used in other wireless communication systems such as Code Division Multiple Access (Code Division Multiple Access, CDMA), Time Division Multiple Access (Time Division Multiple Access, TDMA), Frequency Division Multiple Access (Frequency Division Multiple Access, FDMA), Orthogonal Frequency Division Multiple Access (Orthogonal Frequency Division Multiple Access, OFDMA), Single-carrier Frequency-Division Multiple Access (Single-carrier Frequency-Division Multiple Access, SC-FDMA), and another system. The terms "system" and "network" in the embodiments of this application may be used interchangeably. The technologies described can be applied to both the systems and the radio technologies mentioned above as well as to other systems and radio technologies. The following descriptions describe a new radio (New Radio, NR) system for example purposes, and NR terms are used in most of the following descriptions, but these technologies can also be applied to an application other than an NR system application, for example, a 6^{th} generation (6th Generation, 6G) communication system.

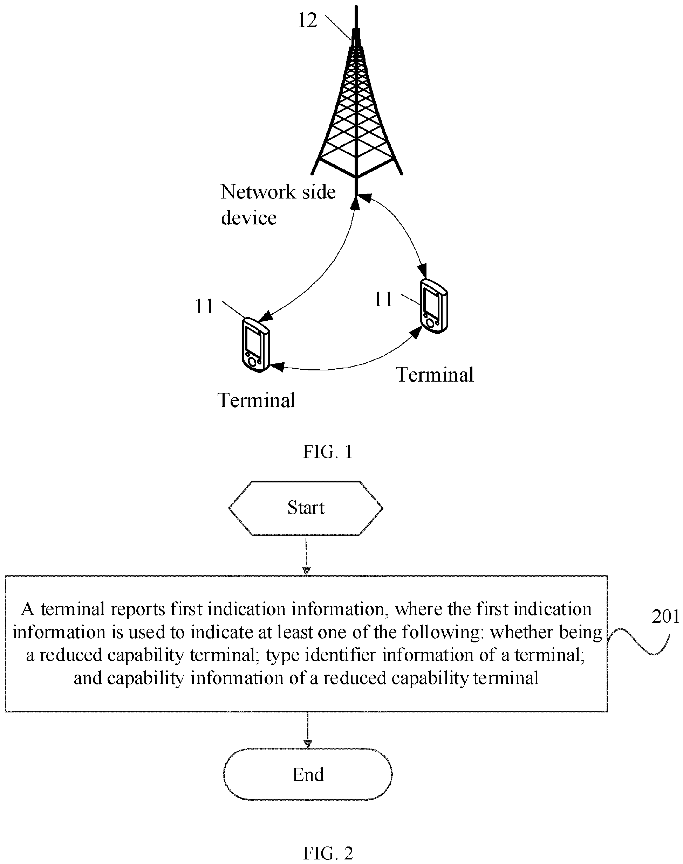

FIG. 1 is a structural diagram of a wireless communication system to which embodiments of this application can be applied. The wireless communication system includes a terminal 11 and a network side device 12. The terminal 11 may also be referred to as a terminal device or user equipment (User Equipment, UE). The terminal 11 may be a terminal side device such as a mobile phone, a tablet computer (Tablet Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile internet device (Mobile Internet Device, MID), a wearable device (Wearable Device), vehicle user equipment (Vehicle User Equipment, VUE), or pedestrian user equipment (Pedestrian User Equipment, PUE). The wearable device includes a smartwatch, a bracelet, a headset, glasses, and the like. It should be noted that a specific type of the terminal 11 is not limited in the embodiments of this application. The network side device 12 may be a base station or a core network device. The base station may be referred to as a NodeB, an evolved NodeB, an access point, a base transceiver station (Base Transceiver Station, BTS), a radio base station, a radio transceiver, a basic service set (Basic Service Set, BSS), an extended service set (Extended Service Set, ESS), a NodeB, an evolved NodeB (eNB), a home NodeB, a home evolved NodeB, a WLAN access point, a Wi-Fi node, a transmitting receiving point (Transmitting Receiving Point, TRP), or another appropriate term in the art. As long as a same technical effect is achieved, the base station is not limited to a specified technical term. It should be noted that, in the embodiments of this application, only a base station in an NR system is used as an example, but a specific type of the base station is not limited.

With reference to the accompanying drawings, an information transmission method provided in the embodiments of this application is described in detail by using some embodiments and application scenes thereof.

As shown in FIG. 2, an embodiment of this application provides a method, including:
Step 201: A terminal reports first indication information, where the first indication information is used to indicate at least one of the following:
whether being a reduced capability terminal;
type identifier information of a terminal; and
capability information of a reduced capability terminal.

A type (Type) in this embodiment of this application may also be described as a category (Category).

The reduced capability terminal is a reduced capability (RedCap) terminal. The type identifier information of the terminal includes a specific type identifier of the terminal or a category number of the terminal. Optionally, the type identifier or the category number includes a Redcap type or category, or a type or category of another non-common terminal. A common terminal is a terminal that has a conventional terminal capability in LTE or NR, and does not include a terminal of a type such as Internet of Things (Internet of Things, IoT)/machine type communication (Machine Type Communication, MTC)/reduced capability.

The type identifier information of the terminal may be first identifier information, second identifier information, or third identifier information. The first identifier information may be used to indicate that the terminal is a common terminal, the second identifier information may be used to indicate that the terminal is a reduced capability terminal of a first type, and the third identifier information may be used to indicate that the terminal is a reduced capability terminal of a second type.

The capability information of the reduced capability terminal may be a capability or capability set of the reduced capability terminal.

In this embodiment of this application, the terminal reports the first indication information, where the first indication information indicates whether the terminal is a reduced capability terminal. In this embodiment of this application, the terminal may correspond to different terminal types in different deployment scenes, that is, in some specific deployment scenes, it may be reported, based on the first indication information, that the terminal type of the terminal is not a reduced capability terminal, thereby improving performance of a reduced capability terminal in different deployment scenes.

Optionally, the reporting, by a terminal, first indication information includes:
reporting, by the terminal, the first indication information in a first reporting manner, where
the first reporting manner includes at least one of the following:
   reporting the first indication information based on per-terminal, that is, reporting the first indication information according to per-terminal; that is, per-UE reports the first indication information;
   reporting the first indication information based on per-band (band), that is, reporting the first indication information according to per-band; that is, per-Band reports the first indication information;
   reporting the first indication information based on per-band combination (band combination), that is, reporting the first indication information according to per-band combination; that is, per-Band combination reports the first indication information;
   reporting the first indication information based on per-carrier (carrier), that is, reporting the first indication information according to per-carrier; that is, per-Carrier reports the first indication information;
   reporting the first indication information based on per-bandwidth part (Bandwidth Part, BWP), that is, reporting, by the terminal, the first indication information according to per-BWP; that is, per-BWP reports the first indication information;
   reporting the first indication information based on per-feature (Feature), that is, reporting, by the terminal, the first indication information according to per-feature, where the feature is a feature defined in a related protocol; that is, per-Feature reports the first indication information;
   reporting the first indication information based on per-feature set (Feature Set); that is, per-FeatureSet reports the first indication information;
   reporting the first indication information based on per-subcarrier spacing (SubCarrier Spacing, SCS); that is, per-SCS reports the first indication information;
   reporting the first indication information based on per-numerology (numerology); that is, per-Numerology reports the first indication information; and
   reporting the first indication information based on an uplink (Uplink, UL) or a downlink (Downlink, DL); that is, per-DL/UL reports the first indication information.

In this embodiment of this application, a type/a category of the terminal corresponds to at least one of the following:
per-UE, that is, per-UE has a corresponding category/type;
per-band, that is, per-band has a corresponding category/type;
per-band combination, that is, per-band combination has a corresponding category/type;
per-carrier, that is, per-carrier has a corresponding category/type;
per-BWP, that is, per-BWP has a corresponding category/type;
per-Feature, that is, per-feature has a corresponding category/type, where the feature is specifically a feature defined in a related protocol;
per-FeatureSet, that is, per-FeatureSet has a corresponding category/type;
per-SCS, that is, per-SCS has a corresponding category/type; and
per-DL/UL, that is, the terminal has corresponding categories/types for an UL and a DL respectively.

In this embodiment of this application, the terminal can determine a type of the terminal by using a smaller granularity (for example, a band, a carrier, or a band combination), and can report a terminal type and/or a capability by using a smaller granularity. Without affecting network side performance, a case that a fine terminal reports a reduced capability category can be minimized for different network deployment scenes, thereby improving overall performance of a reduced capability terminal.

Optionally, the first indication information is included in at least one of the following messages:
message 1 (msg. 1) in a random access process, that is, different first indication information corresponding to different random access preambles (preamble) or preamble groups is used to report to a network side;
message 3 (msg.3) in a random access process, that is, message 3 carries the first indication information;
message 5 (msg.5) in a random access process, where the message 5 is a complete message of a random access process or a corresponding RRC process, and the message 5 carries the first indication information;
a capability reporting message of the terminal, that is, the capability reporting information of the terminal carries the first indication information; and
a type reporting message of the terminal, where the type reporting information may be a newly defined uplink message used to report the first indication information.

Optionally, before the reporting, by a terminal, first indication information, the method further includes:
determining, by the terminal, the first indication information according to target information, where the target information includes at least system configuration information and/or second information, and the second information is used to indicate a state and/or a scene of the terminal.

Optionally, the reporting, by a terminal, first indication information includes:
reporting, by the terminal, the first indication information according to target information, where the target information includes at least system configuration information and/or second information, and the second information is used to indicate a state and/or a scene of the terminal.

Optionally, the target information further includes:
first information, where the first information is used to indicate a capability and/or an attribute parameter of the terminal.

Further, optionally, the first information includes at least one of the following:
bandwidth or maximum bandwidth supported by the terminal;
the number of receive/transmit antennas or the maximum number of receive/transmit antennas supported by the terminal;
the number of multiple input multiple output (Multiple Input Multiple Output, MIMO) layers or the maximum number of MIMO layers (layer) supported by the terminal;
a maximum rate supported by the terminal;
a modulation order (modulation order) or a maximum modulation ordersupported by the terminal;
half-duplex frequency division duplex (Half-Duplex Frequency Division Duplex, Half Duplex FDD) supported by the terminal;
a processing time (processing time) supported by the terminal, where the processing time includes a physical layer processing time (Physical (PHY) processing time), and the physical layer processing time is N1 or N2 in the protocol;
a layer 2 buffer or soft buffer size supported by the terminal;
a packet data convergence protocol PDCP sequence number (Packet Data Convergence Protocol Sequence Number, PDCP SN) or a radio link control sequence number (Radio Link Control Sequence Number, RLC SN) supported by the terminal;
the number of data radio bearers DRBs (Data Radio Bearer, DRB) or the maximum number of DRBs supported by the terminal; and
a radio resource control (RRC) processing delay (RRC processing delay) supported by the terminal.

Optionally, the system configuration information includes at least one of the following:
band (band) information supported by a system, where the band information includes at least one of a band list and bandwidth information corresponding to per-band;
band combination (band combination) information supported by the system, where the band combination information includes at least one of a band combination list and bandwidth information corresponding to per-band combination list;
carrier information supported by the system, where the carrier information includes a carrier within a band and bandwidth information corresponding to a carrier;
system bandwidth, that is, supported bandwidth (supported bandwidth) or maximum bandwidth that is supported by the system and that is configured on the network side;
channel bandwidth, that is, channel bandwidth (channel bandwidth) or maximum channel bandwidth that is supported by the system and that is configured on the network side;
transmission bandwidth, that is, transmission bandwidth (transmission bandwidth) or maximum transmission bandwidth that is supported by the system and that is configured by the network side device;
system frequency band information (frequency band);
BWP configuration information, that is, bandwidth corresponding to an initial BWP (initial BWP), an active BWP (active BWP), or a configured BWP (configured BWP) configured on the network side; and
numerology (Numerology) related information.

The numerology related information includes at least one of the following:
a subcarrier spacing;
a cyclic prefix (Cyclic Prefix, CP) length;
the number of symbols or timeslots in time domain;
a transmission time interval (Transmission Time Interval, TTI) length;
bandwidth corresponding to per-numerology; and
bandwidth corresponding to per-subcarrier spacing.

Optionally, the second information includes at least one of the following:
an application scene of the terminal;
a network type of the terminal;
a network environment in which the terminal is located; and
a channel condition of the terminal.

The application scene of the terminal includes an industrial scene (such as a sensor or an inductor), video surveillance, and a wearable device (such as a watch or glasses), and different application scenes may correspond to different terminal types.

The network type of the terminal may be a public land mobile network (Public Land Mobile Network, PLMN), industrial Internet, or the like corresponding to a network, and different application scenes may correspond to different terminal types.

The network environment in which the terminal is located may be indoor or outdoor, and different network environments may correspond to different terminal types.

The channel condition of the terminal may be that the channel condition of the terminal is superior (which meets preset channel condition information) or the channel condition of the terminal is poor, and different channel conditions correspond to different terminal types.

Optionally, the target information is information corresponding to an uplink and/or a downlink. That is, both the first information and the second information include the information corresponding to the uplink and/or the downlink.

It should be noted that in this embodiment of this application, the method for determining, by the terminal, a terminal category or type according to the target information may be content implementation determining of the terminal, or a terminal category or type may be defined according to the target information, and is specified in a protocol. In a first optional implementation, the terminal performs at least one of a1 and b 1.
(a1) The determining the first indication information includes:
   if bandwidth corresponding to the first information is less than bandwidth corresponding to first system configuration information in the system configuration information, determining that a type corresponding to the terminal in the first system configuration information is a reduced capability terminal or a first type, and/or determining that capability information corresponding to the terminal in the first system configuration information is capability information corresponding to a reduced capability terminal; or
   if bandwidth corresponding to the first information is less than bandwidth corresponding to at least one piece of first system configuration information in the system configuration information, determining that a type corresponding to the terminal in all or a part of the system configuration information is a reduced capability terminal or a first type, and/or determining that capability information corresponding to the terminal in all or a part of the system configuration information is capability information corresponding to a reduced capability terminal, where
   the first system configuration information is one piece of system configuration information in the system configuration information, for example, one band, one band combination, one carrier, one subcarrier spacing, one BWP, one feature, one feature set, or one numerology, and the first type is a type corresponding to a reduced capability terminal, (b1): The reporting the first indication information includes:
   if bandwidth corresponding to the first information is less than bandwidth corresponding to first system configuration information in the system configuration information, reporting that a type corresponding to the terminal in the first system configuration information is a reduced capability terminal or a first type, and/or reporting that capability information corresponding to the terminal in the first system configuration information is capability information corresponding to a reduced capability terminal; or
   if bandwidth corresponding to the first information is less than bandwidth corresponding to at least one piece of first system configuration information in the system configuration information, reporting that a type corresponding to the terminal in all or a part of the system configuration information is a reduced capability terminal or a first type, and/or reporting that capability information corresponding to the terminal in all or a part of the system configuration information is capability information corresponding to a reduced capability terminal, where
   the first system configuration information is one piece of system configuration information in the system configuration information, for example, one band, one band combination, one carrier, one subcarrier spacing, one BWP, one feature, one feature set, or one numerology, and the first type is a type corresponding to a reduced capability terminal.

Specifically, in the first optional implementation, if the bandwidth corresponding to the first information is less than bandwidth corresponding to a BWP, a carrier, a band, a band combination, a frequency, an SCS, or a numerology in the system configuration information, at least one of the following is performed:
(1) Determine that a category or type corresponding to the terminal on a corresponding BWP, carrier, band, band combination, frequency, SCS, numerology, feature, or feature set is a reduced capability terminal or a first type, and/or determine that capability information corresponding to the terminal on a corresponding BWP, carrier, band, band combination, frequency, SCS, numerology, feature, or feature set is capability information corresponding to a reduced capability terminal.
(2) Report, to the network, that a category or type corresponding to the terminal on a corresponding BWP, carrier, band, band combination, frequency, SCS, numerology, feature, or feature set is a reduced capability terminal or a first type, and/or report that capability information corresponding to the terminal on a corresponding BWP, carrier, band, band combination, frequency, SCS, numerology, feature, or feature set is capability information corresponding to a reduced capability terminal.

Specifically, in the first optional implementation, if the bandwidth corresponding to the first information is less than bandwidth corresponding to one or more (including all) BWPs, carriers, bands, band combinations, frequencies, SCSs, or numerologies in the system configuration information, at least one of the following is performed:
(1) Determine that a category or type corresponding to the terminal on all or a part of BWPs, carriers, bands, band combinations, frequencies, SCSs, numerologies, features, or feature sets is a reduced capability terminal or a first type, and/or determine that capability information corresponding to the terminal on all or a part of BWPs, carriers, bands, band combinations, frequencies, SCSs, numerologies, features, or feature sets is capability information corresponding to a reduced capability terminal.
(2) Report, to the network side, that a category or type corresponding to the terminal on all or a part of BWPs, carriers, bands, band combinations, frequencies, SCSs, numerologies, features, or feature sets is a reduced capability terminal or a first type, and/or report that capability information corresponding to the terminal on all or a part of BWPs, carriers, bands, band combinations, frequencies, SCSs, numerologies, features, or feature sets is capability information corresponding to a reduced capability terminal.

In a second optional implementation, the terminal performs at least one of a2 and b2.
(a2): The determining the first indication information includes:
   if bandwidth corresponding to the first information is greater than or equal to bandwidth corresponding to first system configuration information in the system configuration information, determining that a type corresponding to the terminal in the first system configuration information is a common terminal or a second type, and/or determining that capability information corresponding to the terminal in the first system configuration information is capability information corresponding to a common terminal; or
   if bandwidth corresponding to the first information is greater than or equal to bandwidth corresponding to first system configuration information in the system configuration information, determining that a type corresponding to the terminal in the first system configuration information is not a reduced capability terminal or a first type, and/or determining that capability information corresponding to the terminal in the first system configuration information is not capability information corresponding to a reduced capability terminal; or
   if bandwidth corresponding to the first information is greater than or equal to bandwidth corresponding to at least one piece of first system configuration information in the system configuration information, determining that a type corresponding to the terminal in all or a part of the system configuration information is a common terminal or a second type, and/or determining that capability information corresponding to the terminal in all or a part of the system configuration information is capability information corresponding to a common terminal; or
   if first bandwidth corresponding to the first information is greater than or equal to bandwidth corresponding to at least one piece of first system configuration information in the system configuration information, determining that a type corresponding to the terminal in all or a part of the system configuration information is not a reduced capability terminal or a first type, and/or determining that capability information corresponding to the terminal in all or a part of the system configuration information is not capability information corresponding to a reduced capability terminal, where
   the first type is a type corresponding to a reduced capability terminal, and the second type is a type corresponding to a common terminal; and the first system configuration information is one piece of system configuration information in the system configuration information, for example, one band, one band combination, one carrier, one subcarrier spacing, one BWP, one feature, one feature set, or one numerology.
(b2): The reporting the first indication information includes:
   if bandwidth corresponding to the first information is greater than or equal to bandwidth corresponding to first system configuration information in the system configuration information, reporting that a type corresponding to the terminal in the first system configuration information is a common terminal or a second type, and/or reporting that capability information corresponding to the terminal in the first system configuration information is capability information corresponding to a common terminal; or
   if bandwidth corresponding to the first information is greater than or equal to bandwidth corresponding to first system configuration information in the system configuration information, reporting that a type corresponding to the terminal in the first system configuration information is not a reduced capability terminal or a first type, and/or reporting that capability information corresponding to the terminal to the first system configuration information is not capability information corresponding to a reduced capability terminal; or
   if bandwidth corresponding to the first information is greater than or equal to bandwidth corresponding to at least one piece of first system configuration information in the system configuration information, reporting that a type corresponding to the terminal in all or a part of the system configuration information is a common terminal or a second type, and/or reporting that capability information corresponding to the terminal in all or a part of the system configuration information is capability information corresponding to a common terminal; or
   if first bandwidth corresponding to the first information is greater than or equal to bandwidth corresponding to at least one piece of first system configuration information in the system configuration information, reporting that a type corresponding to the terminal in all or a part of the system configuration information is not a reduced capability terminal or a first type, and/or reporting that capability information corresponding to the terminal in all or a part of the system configuration information is not capability information corresponding to a reduced capability terminal, where
   the first type is a type corresponding to a reduced capability terminal, and the second type is a type corresponding to a common terminal; and the first system configuration information is one piece of system configuration information in the system configuration information, for example, one band, one band combination, one carrier, one subcarrier spacing, one BWP, one feature, one feature set, or one numerology.

Specifically, in the second optional implementation, if the bandwidth corresponding to the first information is greater than or equal to bandwidth corresponding to a BWP, a carrier, a band, a band combination, a frequency, an SCS, or a numerology in the system configuration information, at least one of the following is performed:
(1) Determine that a category or type corresponding to the terminal on a corresponding BWP, carrier, band, band combination, frequency, SCS, numerology, feature, or feature set is not a reduced capability terminal or a first type, and/or determine that capability information corresponding to the terminal on a corresponding BWP, carrier, band, band combination, frequency, SCS, numerology, feature, or feature set is not capability information corresponding to a reduced capability terminal.
(2) Determine that a category or type corresponding to the terminal on a corresponding BWP, carrier, band, band combination, frequency, SCS, numerology, feature, or feature set is a common terminal or a second type, and/or determine that capability information corresponding to the terminal on a corresponding BWP, carrier, band, band combination, frequency, SCS, numerology, feature, or feature set is capability information corresponding to a common terminal.
(3) Not report, to the network, that a category or type corresponding to the terminal on a corresponding BWP, carrier, band, band combination, frequency, SCS, numerology, feature, or feature set is a reduced capability terminal or a first type, and/or not report that capability information corresponding to the terminal on a corresponding BWP, carrier, band, band combination, frequency, SCS, numerology, feature, or feature set is capability information corresponding to a reduced capability terminal.
(4) Report, to the network, that a category or type corresponding to the terminal on a corresponding BWP, carrier, band, band combination, frequency, SCS, numerology, feature, or feature set is a common terminal or a second type, and/or report that capability information corresponding to the terminal on a corresponding BWP, carrier, band, band combination, frequency, SCS, numerology, feature or feature set is capability information corresponding to a common terminal.

Specifically, in the second optional implementation, if the bandwidth corresponding to the first information is greater than or equal to bandwidth corresponding to one or more (including all) BWPs, carriers, bands, band combinations, frequencies, SCSs, or numerologies in the system configuration information, at least one of the following is performed:
(1) Determine that a category or type corresponding to the terminal on all or a part of BWPs, carriers, bands, band combinations, frequencies, SCSs, numerologies, features, or feature sets is not a reduced capability terminal or a first type, and/or determine that capability information corresponding to the terminal on all or a part of BWPs, carriers, bands, band combinations, frequencies, SCSs, numerologies, features, or feature sets is not capability information corresponding to a reduced capability terminal.
(2) Determine that a category or type corresponding to the terminal on all or a part of BWPs, carriers, bands, band combinations, frequencies, SCSs, numerologies, features, or feature sets is a common terminal or a second type, and/or determine that capability information corresponding to the terminal on all or a part of BWPs, carriers, bands, band combinations, frequencies, SCSs, numerologies, features, or feature sets is capability information corresponding to a common terminal.
(3) Not report, to the network side, that a category or type corresponding to the terminal on all or a part of BWPs, carriers, bands, band combinations, frequencies, SCSs, numerologies, features, or feature sets is a reduced capability terminal or a first type, and/or not report that capability information corresponding to the terminal on all or a part of BWPs, carriers, bands, band combinations, frequencies, SCSs, numerologies, features, or feature sets is capability information corresponding to a reduced capability terminal.
(4) Report, to the network side, that a category or type corresponding to the terminal on all or a part of BWPs, carriers, bands, band combinations, frequencies, SCSs, numerologies, features, or feature sets is a common terminal or a second type, and/or report that capability information corresponding to the terminal on all or a part of BWPs, carriers, bands, band combinations, frequencies, SCSs, numerologies, features, or feature sets is capability information corresponding to a common terminal.

In a third optional implementation, the terminal performs at least one of a3 and b3.
(a3) If a corresponding terminal type in at least one piece of first system configuration information in the system configuration information is a reduced capability terminal or a first type, determining that a type of the terminal is a reduced capability terminal or a first type, and/or determining that capability information of the terminal is capability information corresponding to a reduced capability terminal; or
   if a corresponding terminal type in at least one piece of first system configuration information in the system configuration information is not a reduced capability terminal or a first type, determining that a type of the terminal is not a reduced capability terminal or a first type, and/or determining that capability information of the terminal is not capability information corresponding to a reduced capability terminal; or
   if a corresponding terminal type in at least one piece of first system configuration information in the system configuration information is a common terminal or a second type, determining that a type of the terminal is a common terminal or a second type, and/or determining that capability information of the terminal is capability information corresponding to a common terminal, where
   the first system configuration information is one piece of system configuration information in the system configuration information, for example, one band, one band combination, one carrier, one subcarrier spacing, one BWP, one feature, one feature set, or one numerology, the first type is a type corresponding to a reduced capability terminal, and the second type is a type corresponding to a common terminal.
(b3) The reporting the first indication information includes:
   if a corresponding terminal type in at least one piece of first system configuration information in the system configuration information is a reduced capability terminal or a first type, reporting that a type of the terminal is a reduced capability terminal or a first type, and/or reporting that capability information of the terminal is capability information corresponding to a reduced capability terminal; or
   if a corresponding terminal type in at least one piece of first system configuration information in the system configuration information is not a reduced capability terminal or a first type, reporting that a type of the terminal is not a reduced capability terminal or a first type, and/or reporting that capability information of the terminal is not capability information corresponding to a reduced capability terminal; or
   if a corresponding terminal type in at least one piece of first system configuration information in the system configuration information is a common terminal or a second type, reporting that a type of the terminal is a common terminal or a second type, and/or reporting that capability information of the terminal is capability information corresponding to a common terminal, where
   the first system configuration information is one piece of system configuration information in the system configuration information, for example, one band, one band combination, one carrier, one subcarrier spacing, one BWP, one feature, one feature set, or one numerology, the first type is a type corresponding to a reduced capability terminal, and the second type is a type corresponding to a common terminal.

Specifically, in the third optional implementation, if the first indication information is reported and/or determined based on per-terminal, when a corresponding terminal type in one or more BWPs, carriers, bands, band combinations, frequencies, SCSs, numerologies, features, or feature sets is a reduced capability terminal, at least one of the following is performed:
(1) Determine that a type of the terminal is a reduced capability terminal or a first type, and/or determine that capability information of the terminal is capability information corresponding to a reduced capability terminal.
(2) Report, to the network side, that a type of the terminal is a reduced capability terminal or a first type, and/or report that capability information of the terminal is capability information corresponding to a reduced capability terminal.

Specifically, in the third optional implementation, if the first indication information is determining a terminal type based on per-terminal or is reported based on per-terminal (that is, determining a terminal type by per-UE or being reported by per-UE), when a corresponding terminal type in one or more BWPs, carriers, bands, band combinations, frequencies, SCSs, numerologies, features, or feature sets is not a reduced capability terminal, or when a corresponding terminal type in one or more BWPs, carriers, bands, band combinations, frequencies, SCSs, numerologies, features, or feature sets is a common terminal or a second type, at least one of the following is performed:
(1) Determine that a type of the terminal is not a reduced capability terminal or a first type, and/or that capability information of the terminal is not capability information corresponding to a reduced capability terminal.
(2) Determine that a type of the terminal is a common terminal or a second type, and/or that capability information of the terminal is capability information corresponding to a common terminal.
(3) Not report, to the network side, that a type of the terminal is a reduced capability terminal or a first type, and/or not report that capability information of the terminal is capability information corresponding to a reduced capability terminal.
(4) Report, to the network side, that a type of the terminal is a common terminal or a second type, and/or report that capability information of the terminal is capability information corresponding to a common terminal.

In a fourth optional implementation, the terminal performs at least one of a4 and b4.
(a4): The determining the first indication information includes:
   if a corresponding terminal type in at least one piece of second system configuration information within a band combination is a reduced capability terminal or a first type, determining that a type corresponding to the terminal in the band combination is a reduced capability terminal or a first type, and/or determining that capability information corresponding to the terminal in the band combination is capability information corresponding to a reduced capability terminal; or
   if a corresponding terminal type in at least one piece of second system configuration information within a band combination is not a reduced capability terminal or a first type, determining that a type corresponding to the terminal in the band combination is not a reduced capability terminal or a first type, and/or determining that capability information corresponding to the terminal in the band combination is not capability information corresponding to a reduced capability terminal; or
   if a corresponding terminal type in at least one piece of second system configuration information within a band combination is a common terminal or a second type, determining that a type corresponding to the terminal in the band combination is a common terminal or a second type, and/or determining that capability information corresponding to the terminal in the band combination is capability information corresponding to a common terminal, where
   the second system configuration information includes a bandwidth part, a carrier, a band, a frequency, a subcarrier spacing, or a numerology.
(b4): The reporting the first indication information includes:
   if a corresponding terminal type in at least one piece of second system configuration information within a band combination is a reduced capability terminal or a first type, reporting that a type corresponding to the terminal in the band combination is a reduced capability terminal or a first type, and/or reporting that capability information corresponding to the terminal in the band combination is capability information corresponding to a reduced capability terminal; or
   if a corresponding terminal type in at least one piece of second system configuration information within a band combination is not a reduced capability terminal or a first type, reporting that a type corresponding to the terminal in the band combination is not a reduced capability terminal or a first type, and/or reporting that capability information corresponding to the terminal in the band combination is not capability information corresponding to a reduced capability terminal; or
   if a corresponding terminal type in at least one piece of second system configuration information within a band combination is a common terminal or a second type, reporting that a type corresponding to the terminal in the band combination is a common terminal or a second type, and/or reporting that capability information corresponding to the terminal in the band combination is capability information corresponding to a common terminal, where
   the second system configuration information includes a bandwidth part, a carrier, a band, a frequency, a subcarrier spacing, or a numerology.

Specifically, in the fourth optional implementation, if the first indication information is determined and/or reported based on a band combination, when a terminal category/type in one or more (including all) BWPs, carriers, bands, frequencies, SCSs, numerologies, features, or feature sets within a band combination is a reduced capability terminal, at least one of the following is performed:
(1) Determine that a type of the terminal in the corresponding band combination is a reduced capability terminal or a first type, and/or that capability information of the terminal in the corresponding band combination is capability information corresponding to a reduced capability terminal.
(2) Report, to the network side, that a type of the terminal in the corresponding band combination is a reduced capability terminal or a first type, and/or report that capability information of the terminal in the corresponding band combination is capability information corresponding to a reduced capability terminal.

Specifically, in the fourth optional implementation, if the first indication information is determined and/or reported based on a band combination (determined and/or reported by per-band combination), when a terminal category/type in one or more (including all) BWPs, carriers, bands, frequencies, SCSs, numerologies, features, or feature sets within a band combination is not a reduced capability terminal, at least one of the following is performed:
(1) Determine that a type of the terminal in the corresponding band combination is not a reduced capability terminal or a first type, and/or determine that capability information of the terminal in the corresponding band combination is not capability information corresponding to a reduced capability terminal.
(2) Determine that a type of the terminal in the corresponding band combination is a common terminal or a second type, and/or determine that capability information of the terminal in the corresponding band combination is capability information corresponding to a common terminal.
(3) Not report, to the network side, that a type of the terminal in the corresponding band combination is a reduced capability terminal or a first type, and/or not report that capability information of the terminal in the corresponding band combination is capability information corresponding to a reduced capability terminal.
(4) Report, to the network side, that a type of the terminal in the corresponding band combination is a common terminal or a second type, and/or report that capability information of the terminal in the corresponding band combination is capability information corresponding to a common terminal.

In a fifth optional implementation, the terminal performs at least one of a5 and b5.
(a5): The determining the first indication information includes:
   if a corresponding terminal type in at least one piece of third system configuration information within a frequency domain unit is a reduced capability terminal or a first type, determining that a type corresponding to the terminal in the frequency domain unit is a reduced capability terminal or a first type, and/or determining that capability information corresponding to the terminal in the frequency domain unit is capability information corresponding to a reduced capability terminal; or
   if a corresponding terminal type in at least one piece of third system configuration information within a frequency domain unit is not a reduced capability terminal or a first type, determining that a type corresponding to the terminal in the frequency domain unit is not a reduced capability terminal or a first type, and/or determining that capability information corresponding to the terminal in the frequency domain unit is not capability information corresponding to a reduced capability terminal; or
   if a corresponding terminal type in at least one piece of third system configuration information within a frequency domain unit is a common terminal or a second type, determining that a type corresponding to the terminal in the frequency domain unit is a common terminal or a second type, and/or determining that capability information corresponding to the terminal in the frequency domain unit is capability information corresponding to a common terminal, where
   the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.
(b5): The reporting the first indication information includes:
   if a corresponding terminal type in at least one piece of third system configuration information within a frequency domain unit is a reduced capability terminal or a first type, reporting that a type corresponding to the terminal in the frequency domain unit is a reduced capability terminal or a first type, and/or reporting that capability information corresponding to the terminal in the frequency domain unit is capability information corresponding to a reduced capability terminal; or
   if a corresponding terminal type in at least one piece of third system configuration information within a frequency domain unit is not a reduced capability terminal or a first type, reporting that a type corresponding to the terminal in the frequency domain unit is not a reduced capability terminal or a first type, and/or reporting that capability information corresponding to the terminal in the frequency domain unit is not capability information corresponding to a reduced capability terminal; or
   if a corresponding terminal type in at least one piece of third system configuration information within a frequency domain unit is a common terminal or a second type, reporting that a type corresponding to the terminal in the frequency domain unit is a common terminal or a second type, and/or reporting that capability information corresponding to the terminal in the frequency domain unit is capability information corresponding to a common terminal, where
   the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.

Specifically, in the fifth optional implementation, if the first indication information is determined and/or reported based on the foregoing band (or carrier), when a terminal type in one or more (including all) BWPs, carriers, frequencies, SCSs, numerologies, features, or feature sets (or a BWP, a band, a frequency, an SCS, a numerology, a feature, or a feature set) within a band is a reduced capability terminal, at least one of the following is performed:
(1) Determine that a type of the terminal in the corresponding band (or carrier) is a reduced capability terminal or a first type, and/or that capability information of the terminal in the corresponding band (or carrier) is capability information corresponding to a reduced capability terminal.
(2) Report, to the network side, that a type of the terminal in the corresponding band (or carrier) is a reduced capability terminal or a first type, and/or report that capability information of the terminal in the corresponding band (or carrier) is capability information corresponding to a reduced capability terminal.

Specifically, in the fifth optional implementation, if the first indication information is determined and/or reported based on the foregoing band (or carrier) (that is, determined and/or reported by per-band/per-carrier), when a terminal type in one or more (including all) BWPs, carriers, frequencies, SCSs, numerologies, features, or feature sets (or a BWP, a band, a frequency, an SCS, a numerology, a feature, or a feature set) within a band is not a reduced capability terminal, at least one of the following is performed:
(1) Determine that a type of the terminal in the corresponding band (or carrier) is not a reduced capability terminal or a first type, and/or determine that capability information of the terminal in the corresponding band (or carrier) is not capability information corresponding to a reduced capability terminal.
(2) Determine that a type of the terminal in the corresponding band (or carrier) is a common terminal or a second type, and/or determine that capability information of the terminal in the corresponding band (or carrier) is capability information corresponding to a common terminal.
(3) Not report, to the network side, that a type of the terminal in the corresponding band (or carrier) is a reduced capability terminal or a first type, and/or not report that capability information of the terminal in the corresponding band (or carrier) is capability information corresponding to a reduced capability terminal.
(4) Report, to the network side, that a type of the terminal in the corresponding band (or carrier) is a common terminal or a second type, and/or report that capability information of the terminal in the corresponding band (or carrier) is capability information corresponding to a common terminal.

It should be noted that, in the foregoing first optional implementation to the fifth optional implementation, if no uplink or downlink is specified, the type of the foregoing terminal is an uplink terminal type and a downlink terminal type of the terminal. If an uplink or a downlink is specified, a BWP, a carrier, a band, a band combination, a frequency, an SCS, a numerology, a feature, or a feature set is an uplink type or a downlink type corresponding to the terminal.

In a sixth optional implementation, the terminal performs at least one of a6 and b6.
(a6): The determining the first indication information includes:
   if a terminal type of the terminal in an uplink or a downlink is a reduced capability terminal or a first type, determining that a type of the terminal is a reduced capability terminal or a first type, and/or determining that a capability of the terminal is capability information corresponding to a reduced capability terminal; or
   if neither a terminal type of the terminal in an uplink nor a terminal type of the terminal in a downlink is a reduced capability terminal or a first type, determining that a type of the terminal is not a reduced capability terminal or a first type, and/or determining that capability information of the terminal is not capability information corresponding to a reduced capability terminal; or
   if neither a terminal type of the terminal in an uplink nor a terminal type of the terminal in a downlink is a reduced capability terminal or a first type, determining that a type of the terminal is a common terminal or a second type, and/or determining that capability information of the terminal is capability information corresponding to a common terminal.
(b6): The reporting the first indication information includes:
   if a terminal type of the terminal in an uplink or a downlink is a reduced capability terminal or a first type, reporting that a type of the terminal is a reduced capability terminal or a first type, and/or reporting that a capability of the terminal is capability information corresponding to a reduced capability terminal; or
   if neither a terminal type of the terminal in an uplink nor a terminal type of the terminal in a downlink is a reduced capability terminal or a first type, reporting that a type of the terminal is not a reduced capability terminal or a first type, and/or reporting that capability information of the terminal is not capability information corresponding to a reduced capability terminal; or
   if neither a terminal type of the terminal in an uplink nor a terminal type of the terminal in a downlink is a reduced capability terminal or a first type, reporting that a type of the terminal is a common terminal or a second type, and/or reporting that capability information of the terminal is capability information corresponding to a common terminal.

Specifically, in the sixth optional implementation, if the first indication information is determined and/or reported based on an uplink or a downlink, when a terminal type in an uplink or a downlink is a reduced capability terminal or a first type, at least one of the following is performed:
(1) Determine that a type of the terminal is a reduced capability terminal or a first type, and/or determine that capability information of the terminal is capability information corresponding to a reduced capability terminal.
(2) Report, to the network side, that a type of the terminal is a reduced capability terminal or a first type, and/or report that capability information of the terminal is capability information corresponding to a reduced capability terminal.

Specifically, in the sixth optional implementation, if the first indication information is determined and/or reported based on an uplink or a downlink, when neither a terminal type in an uplink nor a terminal type in a downlink is a reduced capability terminal or a first type, at least one of the following is performed:
(1) Determine that a type of the terminal is not a reduced capability terminal or a first type, and/or determine that capability information of the terminal is not capability information corresponding to a reduced capability terminal.
(2) Determine that a type of the terminal is a common terminal or a second type, and/or determine that capability information of the terminal is capability information corresponding to a common terminal.
(3) Not report, to the network side, that a type of the terminal is a reduced capability terminal or a first type, and/or not report that capability information of the terminal is capability information corresponding to a reduced capability terminal.
(4) Report, to the network side, that a type of the terminal is a common terminal or a second type, and/or report that capability information of the terminal is capability information corresponding to a common terminal.

Optionally, the method in this embodiment of this application further includes:
if a first condition is met, not reporting a reduced capability terminal type and/or not reporting capability information corresponding to a reduced capability terminal, where
the first condition includes at least one of the following:
   bandwidth corresponding to the first information is less than bandwidth corresponding to first system configuration information in the system configuration information;
   bandwidth corresponding to the first information is less than bandwidth corresponding to at least one piece of first system configuration information in the system configuration information;
   a corresponding terminal type in at least one piece of first system configuration information is not a reduced capability terminal or a first type;
   a corresponding terminal type in at least one piece of second system configuration information within a band combination is not a reduced capability terminal or a first type;
   a corresponding terminal type in at least one piece of third system configuration information within a frequency domain unit is not a reduced capability terminal or a first type;
   neither a terminal type of the terminal in an uplink nor a terminal type of the terminal in a downlink is a reduced capability terminal or a first type, where
   the first system configuration information is one piece of system configuration information in the system configuration information, for example, one band, one band combination, one carrier, one subcarrier spacing, one BWP, one feature, one feature set, or one numerology. The second system configuration information includes a bandwidth part, a carrier, a band, a frequency, a subcarrier spacing, or a numerology, the frequency domain unit is a band or a carrier, and the third system configuration information includes a bandwidth part, a carrier, a frequency, a subcarrier spacing, or a numerology, or the third system configuration information includes a bandwidth part, a band, a frequency, a subcarrier spacing, or a numerology.

In this embodiment of this application, the terminal can determine a type of the terminal by using a smaller granularity (for example, a band, a carrier, or a band combination), and can report a type and/or a capability of the terminal by using a smaller granularity, so that a case that a fine terminal reports a reduced capability category can be minimized without affecting network side performance, thereby improving overall performance of a reduced capability terminal.

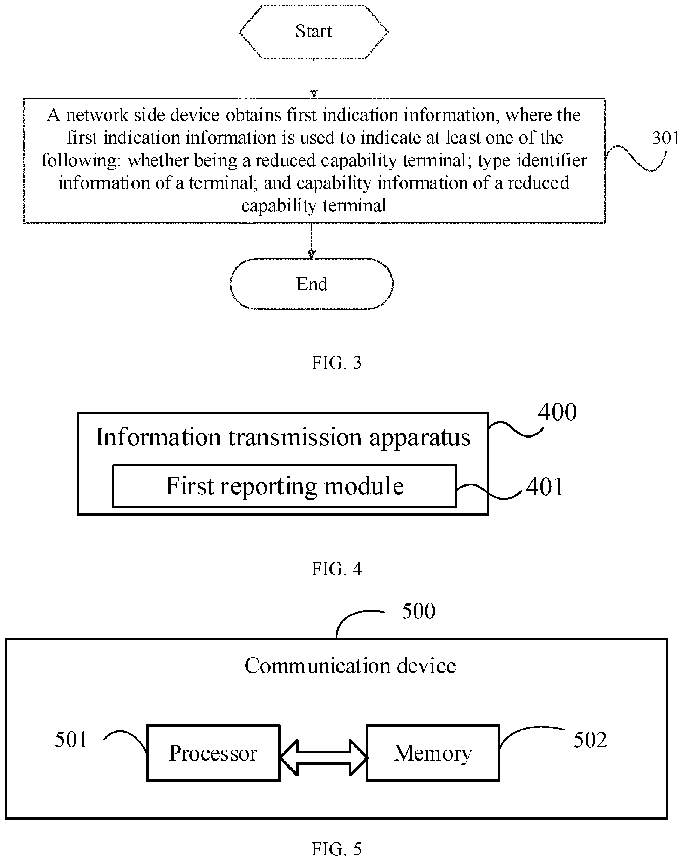

As shown in FIG. 3, an embodiment of this application further provides an information obtaining method, including:

Step 301: A network side device obtains first indication information, where the first indication information is used to indicate at least one of the following:
whether being a reduced capability terminal;
type identifier information of a terminal; and
capability information of a reduced capability terminal.

A type (Type) in this embodiment of this application may also be described as a category (Category).

The type identifier information of the terminal may be first identifier information, second identifier information, or third identifier information. The first identifier information may be used to indicate that the terminal is a common terminal, the second identifier information may be used to indicate that the terminal is a reduced capability terminal of a first type, and the third identifier information may be used to indicate that the terminal is a reduced capability terminal of a second type.

The capability information of the reduced capability terminal may be a capability or capability set of the reduced capability terminal.

In this embodiment of this application, the first indication information indicates whether the terminal is a reduced capability terminal, and the terminal does not always report that the terminal type of the terminal is a reduced capability terminal. In some specific deployment scenes, it may be reported that the terminal type of the terminal is not a reduced capability terminal, so that a network side device may use the terminal as a common terminal for corresponding processing, thereby improving performance of a reduced capability terminal in different deployment scenes.

Optionally, the obtaining, by a network side device, first indication information includes:
obtaining, by the network side device, the first indication information in a first obtaining manner, where
the first obtaining manner includes at least one of the following:
   obtaining the first indication information based on per-terminal;
   obtaining the first indication information based on per-band;
   obtaining the first indication information based on per-band combination;
   obtaining the first indication information based on per-carrier;
   obtaining the first indication information based on per-bandwidth part;
   obtaining the first indication information based on per-feature;
   obtaining the first indication information based on per-feature set;
   obtaining the first indication information based on per-subcarrier spacing;
   obtaining the first indication information based on per-numerology; and
   obtaining the first indication information based on an uplink or a downlink.

Optionally, the first indication information is included in at least one of the following messages:
message 1 (msg. 1) in a random access process, that is, different first indication information corresponding to different random access preambles (preamble) or preamble groups is used to report to a network side;
message 3 (msg.3) in a random access process, that is, message 3 carries the first indication information;
message 5 (msg.5) in a random access process, where the message 5 is a complete message of a random access process or a corresponding RRC process, and the message 5 carries the first indication information;
a capability reporting message of the terminal, that is, the capability reporting information of the terminal carries the first indication information; and
a type reporting message of the terminal, where the type reporting information may be a newly defined uplink message used to report the first indication information.

In this embodiment of this application, the first indication information indicates whether the terminal is a reduced capability terminal, and the terminal does not always report that the terminal type of the terminal is a reduced capability terminal. In some specific deployment scenes, it may be reported that the terminal type of the terminal is not a reduced capability terminal, so that a network side device may use the terminal as a common terminal for corresponding processing, thereby improving performance of a reduced capability terminal in different deployment scenes.

It should be noted that the information transmission method provided in the embodiments of this application may be performed by an information transmission apparatus, or a control module that is in the information transmission apparatus and that is configured to perform the information transmission method. In the embodiments of this application, that the information transmission apparatus performs the information transmission method is used as an example to describe the information transmission apparatus provided in the embodiments of this application.

As shown in FIG. 4, an embodiment of this application further provides an information transmission apparatus 400, including:
a first reporting module 401, configured to report first indication information, where the first indication information is used to indicate at least one of the following:
whether being a reduced capability terminal;
type identifier information of a terminal; and
capability information of a reduced capability terminal.

Optionally, the first reporting module is configured to report the first indication information in a first reporting manner, where
the first reporting manner includes at least one of the following:
reporting the first indication information based on per-terminal;
reporting the first indication information based on per-band;
reporting the first indication information based on per-band combination;
reporting the first indication information based on per-carrier;
reporting the first indication information based on per-bandwidth part;
reporting the first indication information based on per-feature;
reporting the first indication information based on per-feature set;
reporting the first indication information based on per-subcarrier spacing;
reporting the first indication information based on per-numerology; and
reporting the first indication information based on an uplink or a downlink.

Optionally, the first indication information is included in at least one of the following messages:
message 1 in a random access process;
message 3 in a random access process;
message 5 in a random access process;
a capability reporting message of the terminal; and
a type reporting message of the terminal.

Optionally, the apparatus in this embodiment of this application further includes:
a first determining module, configured to: before the first reporting module reports the first indication information, determine the first indication information according to target information, where the target information includes at least system configuration information and/or second information, and the second information is used to indicate a state and/or a scene of the terminal.

Optionally, the first reporting module is configured to report the first indication information according to target information, where the target information includes at least system configuration information and/or second information, and the second information is used to indicate a state and/or a scene of the terminal.

Optionally, the target information further includes:
first information, where the first information is used to indicate a capability and/or an attribute parameter of the terminal.

Optionally, the first information includes at least one of the following:
bandwidth or maximum bandwidth supported by the terminal;
the number of receive/transmit antennas or the maximum number of receive/transmit antennas supported by the terminal;
the number of multiple input multiple output MIMO layers or the maximum number of MIMO layers supported by the terminal;
a maximum rate supported by the terminal;
a modulation order or a maximum modulation order supported by the terminal;
half-duplex frequency division duplex Half Duplex FDD supported by the terminal;
a processing time supported by the terminal;
a layer 2 buffer or soft buffer size supported by the terminal;
a packet data convergence protocol PDCP sequence number or a radio link control sequence number supported by the terminal;
the number of data radio bearers DRBs or the maximum number of DRBs supported by the terminal; and
a radio resource control RRC processing delay supported by the terminal.

Optionally, the system configuration information includes at least one of the following:
band information supported by a system;
band combination information supported by the system;
carrier information supported by the system;
system bandwidth;
channel bandwidth;
transmission bandwidth;
system frequency band information;
BWP configuration information; and
numerology related information.

Optionally, the second information includes at least one of the following:
an application scene of the terminal;
a network type of the terminal;
a network environment in which the terminal is located; and
a channel condition of the terminal.

Optionally, the first determining module is configured to: if bandwidth corresponding to the first information is less than bandwidth corresponding to first system configuration information in the system configuration information, determine that a type corresponding to the terminal in the first system configuration information is a reduced capability terminal or a first type, and/or determine that capability information corresponding to the terminal in the first system configuration information is capability information corresponding to a reduced capability terminal; or
if bandwidth corresponding to the first information is less than bandwidth corresponding to at least one piece of first system configuration information in the system configuration information, determine that a type corresponding to the terminal in all or a part of the system configuration information is a reduced capability terminal or a first type, and/or determine that capability information corresponding to the terminal in all or a part of the system configuration information is capability information corresponding to a reduced capability terminal, where
the first system configuration information is one piece of system configuration information in the system configuration information, and the first type is a type corresponding to a reduced capability terminal.

Optionally, the first determining module is configured to: if bandwidth corresponding to the first information is greater than or equal to bandwidth corresponding to first system configuration information in the system configuration information, determine that a type corresponding to the terminal in the first system configuration information is a common terminal or a second type, and/or determine that capability information corresponding to the terminal in the first system configuration information is capability information corresponding to a common terminal; or
if bandwidth corresponding to the first information is greater than or equal to bandwidth corresponding to first system configuration information in the system configuration information, determine that a type corresponding to the terminal in the first system configuration information is not a reduced capability terminal or a first type, and/or determine that capability information corresponding to the terminal in the first system configuration information is not capability information corresponding to a reduced capability terminal; or
if bandwidth corresponding to the first information is greater than or equal to bandwidth corresponding to at least one piece of first system configuration information in the system configuration information, determine that a type corresponding to the terminal in all or a part of the system configuration information is a common terminal or a second type, and/or determine that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, determine that a type corresponding to the terminal in all or a part of the system configuration information is not a reduced capability terminal or a first type, and/or determine that capability information corresponding to the terminal in all or a part of the system configuration information is not capability information corresponding to a reduced capability terminal, where
the first type is a type corresponding to a reduced capability terminal, and the second type is a type corresponding to a common terminal; and the first system configuration information is one piece of system configuration information in the system configuration information.

Optionally, the first determining module is configured to: if a corresponding terminal type in at least one piece of first system configuration information in the system configuration information is a reduced capability terminal or a first type, determine that a type of the terminal is a reduced capability terminal or a first type, and/or determine that capability information of the terminal is capability information corresponding to a reduced capability terminal; or
if a corresponding terminal type in at least one piece of first system configuration information in the system configuration information is not a reduced capability terminal or a first type, determine that a type of the terminal is not a reduced capability terminal or a first type, and/or determine that capability information of the terminal is not capability information corresponding to a reduced capability terminal; or
if a corresponding terminal type in at least one piece of first system configuration information in the system configuration information is a common terminal or a second type, determine that a type of the terminal is a common terminal or a second type, and/or determine that capability information of the terminal is capability information corresponding to a common terminal, where
the first system configuration information is one piece of system configuration information in the system configuration information, the first type is a type corresponding to a reduced capability terminal, and the second type is a type corresponding to a common terminal.

Optionally, the first determining module is configured to: if a corresponding terminal type in at least one piece of second system configuration information within a band combination is a reduced capability terminal or a first type, determine that a type corresponding to the terminal in the band combination is a reduced capability terminal or a first type, and/or determine that capability information corresponding to the terminal in the band combination is capability information corresponding to a reduced capability terminal; or
if a corresponding terminal type in at least one piece of second system configuration information within a band combination is not a reduced capability terminal or a first type, determine that a type corresponding to the terminal in the band combination is not a reduced capability terminal or a first type, and/or determine that capability information corresponding to the terminal in the band combination is not capability information corresponding to a reduced capability terminal; or
if a corresponding terminal type in at least one piece of second system configuration information within a band combination is a common terminal or a second type, determine that a type corresponding to the terminal in the band combination is a common terminal or a second type, and/or determine that capability information corresponding to the terminal in the band combination is capability information corresponding to a common terminal, where
the second system configuration information includes a bandwidth part, a carrier, a band, a frequency, a subcarrier spacing, or a numerology.

Optionally, the first determining module is configured to: if a corresponding terminal type in at least one piece of third system configuration information within a frequency domain unit is a reduced capability terminal or a first type, determine that a type corresponding to the terminal in the frequency domain unit is a reduced capability terminal or a first type, and/or determine that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, determine that a type corresponding to the terminal in the frequency domain unit is not a reduced capability terminal or a first type, and/or determine that capability information corresponding to the terminal in the frequency domain unit is not capability information corresponding to a reduced capability terminal; or
if a corresponding terminal type in at least one piece of third system configuration information within a frequency domain unit is a common terminal or a second type, determine that a type corresponding to the terminal in the frequency domain unit is a common terminal or a second type, and/or determine that capability information corresponding to the terminal in the frequency domain unit is capability information corresponding to a common terminal, where
the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.

Optionally, the first determining module is configured to: if a terminal type of the terminal in an uplink or a downlink is a reduced capability terminal or a first type, determine that a type of the terminal is a reduced capability terminal or a first type, and/or determine that a capability of the terminal is capability information corresponding to a reduced capability terminal; or
if neither a terminal type of the terminal in an uplink nor a terminal type of the terminal in a downlink is a reduced capability terminal or a first type, determine that a type of the terminal is not a reduced capability terminal or a first type, and/or determine that capability information of the terminal is not capability information corresponding to a reduced capability terminal; or
if neither a terminal type of the terminal in an uplink nor a terminal type of the terminal in a downlink is a reduced capability terminal or a first type, determining that a type of the terminal is a common terminal or a second type, and/or determining that capability information of the terminal is capability information corresponding to a common terminal.

Optionally, the first reporting module is configured to: if bandwidth corresponding to the first information is less than bandwidth corresponding to first system configuration information in the system configuration information, report that a type corresponding to the terminal in the first system configuration information is a reduced capability terminal or a first type, and/or report that capability information corresponding to the terminal in the first system configuration information is capability information corresponding to a reduced capability terminal; or
if bandwidth corresponding to the first information is less than bandwidth corresponding to at least one piece of first system configuration information in the system configuration information, report that a type corresponding to the terminal in all or a part of the system configuration information is a reduced capability terminal or a first type, and/or report that capability information corresponding to the terminal in all or a part of the system configuration information is capability information corresponding to a reduced capability terminal, where
the first system configuration information is one piece of system configuration information in the system configuration information, and the first type is a type corresponding to a reduced capability terminal.

Optionally, the first reporting module is configured to: if bandwidth corresponding to the first information is greater than or equal to bandwidth corresponding to first system configuration information in the system configuration information, report that a type corresponding to the terminal in the first system configuration information is a common terminal or a second type, and/or report that capability information corresponding to the terminal in the first system configuration information is capability information corresponding to a common terminal; or
if bandwidth corresponding to the first information is greater than or equal to bandwidth corresponding to first system configuration information in the system configuration information, report that a type corresponding to the terminal in the first system configuration information is not a reduced capability terminal or a first type, and/or report that capability information corresponding to the terminal to the first system configuration information is not capability information corresponding to a reduced capability terminal; or
if bandwidth corresponding to the first information is greater than or equal to bandwidth corresponding to at least one piece of first system configuration information in the system configuration information, report that a type corresponding to the terminal in all or a part of the system configuration information is a common terminal or a second type, and/or report that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, report that a type corresponding to the terminal in all or a part of the system configuration information is not a reduced capability terminal or a first type, and/or report that capability information corresponding to the terminal in all or a part of the system configuration information is not capability information corresponding to a reduced capability terminal, where
the first type is a type corresponding to a reduced capability terminal, and the second type is a type corresponding to a common terminal; and the first system configuration information is one piece of system configuration information in the system configuration information.

Optionally, the first reporting module is configured to: if a corresponding terminal type in at least one piece of first system configuration information in the system configuration information is a reduced capability terminal or a first type, report that a type of the terminal is a reduced capability terminal or a first type, and/or report that capability information of the terminal is capability information corresponding to a reduced capability terminal; or
if a corresponding terminal type in at least one piece of first system configuration information in the system configuration information is not a reduced capability terminal or a first type, report that a type of the terminal is not a reduced capability terminal or a first type, and/or report that capability information of the terminal is not capability information corresponding to a reduced capability terminal; or
if a corresponding terminal type in at least one piece of first system configuration information in the system configuration information is a common terminal or a second type, report that a type of the terminal is a common terminal or a second type, and/or report that capability information of the terminal is capability information corresponding to a common terminal, where
the first system configuration information is one piece of system configuration information in the system configuration information, the first type is a type corresponding to a reduced capability terminal, and the second type is a type corresponding to a common terminal.

Optionally, the first reporting module is configured to: if a corresponding terminal type in at least one piece of second system configuration information within a band combination is a reduced capability terminal or a first type, report that a type corresponding to the terminal in the band combination is a reduced capability terminal or a first type, and/or report that capability information corresponding to the terminal in the band combination is capability information corresponding to a reduced capability terminal; or
if a corresponding terminal type in at least one piece of second system configuration information within a band combination is not a reduced capability terminal or a first type, report that a type corresponding to the terminal in the band combination is not a reduced capability terminal or a first type, and/or report that capability information corresponding to the terminal in the band combination is not capability information corresponding to a reduced capability terminal; or
if a corresponding terminal type in at least one piece of second system configuration information within a band combination is a common terminal or a second type, report that a type corresponding to the terminal in the band combination is a common terminal or a second type, and/or report that capability information corresponding to the terminal in the band combination is capability information corresponding to a common terminal, where
the second system configuration information includes a bandwidth part, a carrier, a band, a frequency, a subcarrier spacing, or a numerology.

Optionally, the first reporting module is configured to: if a corresponding terminal type in at least one piece of third system configuration information within a frequency domain unit is a reduced capability terminal or a first type, report that a type corresponding to the terminal in the frequency domain unit is a reduced capability terminal or a first type, and/or report that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, report that a type corresponding to the terminal in the frequency domain unit is not a reduced capability terminal or a first type, and/or report that capability information corresponding to the terminal in the frequency domain unit is not capability information corresponding to a reduced capability terminal; or
if a corresponding terminal type in at least one piece of third system configuration information within a frequency domain unit is a common terminal or a second type, report that a type corresponding to the terminal in the frequency domain unit is a common terminal or a second type, and/or report that capability information corresponding to the terminal in the frequency domain unit is capability information corresponding to a common terminal, where
the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.

Optionally, the first reporting module is configured to: if a terminal type of the terminal in an uplink or a downlink is a reduced capability terminal or a first type, report that a type of the terminal is a reduced capability terminal or a first type, and/or report that a capability of the terminal is capability information corresponding to a reduced capability terminal; or
if neither a terminal type of the terminal in an uplink nor a terminal type of the terminal in a downlink is a reduced capability terminal or a first type, report that a type of the terminal is not a reduced capability terminal or a first type, and/or report that capability information of the terminal is not capability information corresponding to a reduced capability terminal; or
if neither a terminal type of the terminal in an uplink nor a terminal type of the terminal in a downlink is a reduced capability terminal or a first type, report that a type of the terminal is a common terminal or a second type, and/or report that capability information of the terminal is capability information corresponding to a common terminal.

Optionally, the apparatus in this embodiment of this application further includes:
a first processing module, configured to: if a first condition is met, not report a reduced capability terminal type and/or not report capability information corresponding to a reduced capability terminal, where
the first condition includes at least one of the following:
   bandwidth corresponding to the first information is less than bandwidth corresponding to first system configuration information in the system configuration information;
   bandwidth corresponding to the first information is less than bandwidth corresponding to at least one piece of first system configuration information in the system configuration information;
   a corresponding terminal type in at least one piece of first system configuration information is not a reduced capability terminal or a first type;
   a corresponding terminal type in at least one piece of second system configuration information within a band combination is not a reduced capability terminal or a first type;
   a corresponding terminal type in at least one piece of third system configuration information within a frequency domain unit is not a reduced capability terminal or a first type;
   neither a terminal type of the terminal in an uplink nor a terminal type of the terminal in a downlink is a reduced capability terminal or a first type, where
   the first system configuration information is one piece of system configuration information in the system configuration information, the second system configuration information includes a bandwidth part, a carrier, a band, a frequency, a subcarrier spacing, or a numerology, the frequency domain unit is a band or a carrier, and the third system configuration information includes a bandwidth part, a carrier, a frequency, a subcarrier spacing, or a numerology, or the third system configuration information includes a bandwidth part, a band, a frequency, a subcarrier spacing, or a numerology.

Optionally, the target information is information corresponding to an uplink and/or a downlink.

The information transmission apparatus in this embodiment of this application reports the first indication information, where the first indication information indicates whether the terminal is a reduced capability terminal. In this embodiment of this application, the terminal may correspond to different terminal types in different deployment scenes, that is, in some specific deployment scenes, it may be reported, based on the first indication information, that the terminal type of the terminal is not a reduced capability terminal, thereby improving performance of a reduced capability terminal in different deployment scenes.

The information transmission apparatus in this embodiment of this application may be an apparatus, an apparatus or an electronic device with an operating system, or may be a component, an integrated circuit, or a chip in a terminal. The apparatus or the electronic device may be a mobile terminal, or a non-mobile terminal. For example, the mobile terminal may include but is not limited to the types of the foregoing listed terminal 11, and the non-mobile terminal may be a server, a network attached storage (Network Attached Storage, NAS), a personal computer (personal computer, PC), a television (television, TV), an automated teller machine, or a self-service machine. This is not specifically limited in the embodiments of this application.

The apparatus provided in this embodiment of this application can implement the processes implemented in the method embodiment in FIG. 2, and achieve a same technical effect. To avoid repetition, details are not described herein again.

Optionally, as shown in FIG. 5, an embodiment of this application further provides a communication device 500, including a processor 501, a memory 502, and a program or an instruction that is stored in the memory 502 and that can be run on the processor 501. For example, when the communication device 500 is a terminal, the program or the instruction is executed by the processor 501 to implement the processes of the foregoing information transmission method embodiment applied to the terminal, and a same technical effect can be achieved. When the communication device 500 is a network side device, the program or the instruction is executed by the processor 501 to implement the processes of the foregoing information obtaining method embodiment applied to the network side device, and a same technical effect can be achieved. To avoid repetition, details are not described herein again.

An embodiment of this application further provides a terminal, including a processor and a communication interface, where the communication interface is configured to report first indication information, where the first indication information is used to indicate at least one of the following:
whether being a reduced capability terminal;
type identifier information of a terminal; and
capability information of a reduced capability terminal.

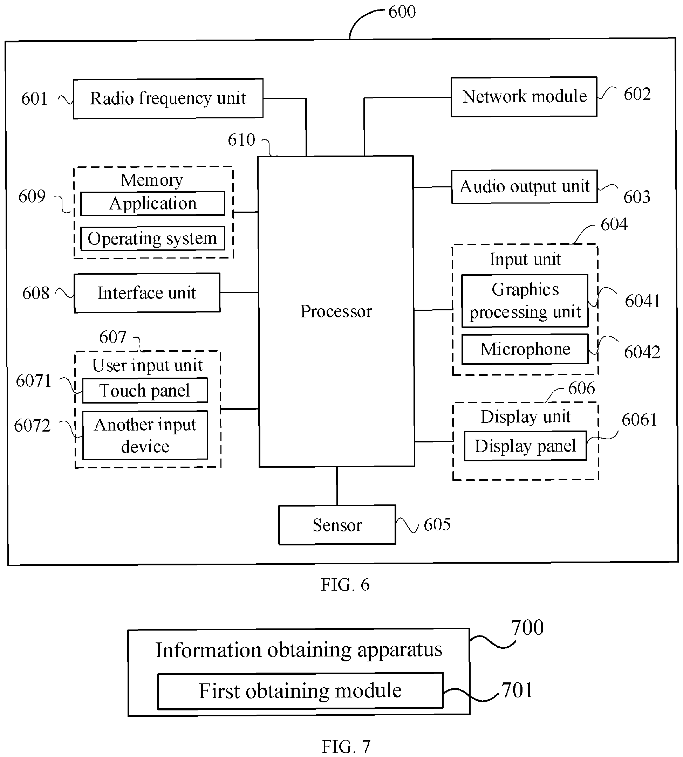

This terminal embodiment corresponds to the foregoing method embodiment on the terminal side. Each implementation process and implementation of the foregoing method embodiment may be applicable to this terminal embodiment, and a same technical effect can be achieved. Specifically, FIG. 6 is a schematic structural diagram of hardware of a terminal according to an embodiment of this application. The terminal 600 includes but is not limited to at least some components such as a radio frequency unit 601, a network module 602, an audio output unit 603, an input unit 604, a sensor 605, a display unit 606, a user input unit 607, an interface unit 608, a memory 609, and a processor 610.

A person skilled in the art can understand that the terminal 600 may further include a power supply (such as a battery) that supplies power to each component. The power supply may be logically connected to the processor 610 by using a power supply management system, to implement functions such as charging and discharging management, and power consumption management by using the power supply management system. The terminal structure shown in FIG. 6 constitutes no limitation on the terminal, and the terminal may include more or fewer components than those shown in the figure, or combine some components, or have different component arrangements. Details are not described herein.

It should be understood that, in this embodiment of this application, the input unit 604 may include a graphics processing unit (Graphics Processing Unit, GPU) 6041 and a microphone 6042, and the graphics processing unit 6041 processes image data of a still picture or a video obtained by an image capture apparatus (such as a camera) in a video capture mode or an image capture mode. The display unit 606 may include a display panel 6061. Optionally, the display panel 6061 may be configured in a form such as a liquid crystal display or an organic light-emitting diode. The user input unit 607 includes a touch panel 6071 and another input device 6072. The touch panel 6071 is also referred to as a touchscreen. The touch panel 6071 may include two parts: a touch detection apparatus and a touch controller. The another input device 6072 may include but is not limited to a physical keyboard, a functional button (such as a volume control button or a power on/off button), a trackball, a mouse, and a joystick. Details are not described herein.

In this embodiment of this application, the radio frequency unit 601 receives downlink data from a network side device and then sends the downlink data to the processor 610 for processing; and sends uplink data to the network side device. Usually, the radio frequency unit 601 includes but is not limited to an antenna, at least one amplifier, a transceiver, a coupler, a low noise amplifier, a duplexer, and the like.

The memory 609 may be configured to store a software program or an instruction and various data. The memory 609 may mainly include a program or instruction storage area and a data storage area. The program or instruction storage area may store an operating system, and an application or an instruction required by at least one function (for example, a sound playing function or an image playing function). In addition, the memory 609 may include a high-speed random access memory, and may further include a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory, for example, at least one disk storage component, a flash memory component, or another non-volatile solid-state storage component.

The processor 610 may include one or more processing units. Optionally, an application processor and a modem processor may be integrated into the processor 610. The application processor mainly processes an operating system, a user interface, an application, an instruction, or the like. The modem processor mainly processes wireless communication, for example, a baseband processor. It can be understood that, alternatively, the modem processor may not be integrated into the processor 610.

The radio frequency unit 601 is configured to report first indication information, where the first indication information is used to indicate at least one of the following:
whether being a reduced capability terminal;
type identifier information of a terminal; and
capability information of a reduced capability terminal.

Optionally, the radio frequency unit 601 is configured to report the first indication information in a first reporting manner, where
the first reporting manner includes at least one of the following:
reporting the first indication information based on per-terminal;
reporting the first indication information based on per-band;
reporting the first indication information based on per-band combination;
reporting the first indication information based on per-carrier;
reporting the first indication information based on per-bandwidth part;
reporting the first indication information based on per-feature;
reporting the first indication information based on per-feature set;
reporting the first indication information based on per-subcarrier spacing;
reporting the first indication information based on per-numerology; and
reporting the first indication information based on an uplink or a downlink.

Optionally, the first indication information is included in at least one of the following messages:
message 1 in a random access process;
message 3 in a random access process;
message 5 in a random access process;
a capability reporting message of the terminal; and
a type reporting message of the terminal.

Optionally, the processor 610 is configured to: before the radio frequency unit 601 reports the first indication information, determine the first indication information according to target information, where the target information includes at least system configuration information and/or second information, and the second information is used to indicate a state and/or a scene of the terminal.

Optionally, the radio frequency unit 601 is configured to report the first indication information according to target information, where the target information includes at least system configuration information and/or second information, and the second information is used to indicate a state and/or a scene of the terminal.

Optionally, the target information further includes:
first information, where the first information is used to indicate a capability and/or an attribute parameter of the terminal.

Optionally, the first information includes at least one of the following:
bandwidth or maximum bandwidth supported by the terminal;
the number of receive/transmit antennas or the maximum number of receive/transmit antennas supported by the terminal;
the number of multiple input multiple output MIMO layers or the maximum number of MIMO layers supported by the terminal;
a maximum rate supported by the terminal;
a modulation order or a maximum modulation order supported by the terminal;
half-duplex frequency division duplex Half Duplex FDD supported by the terminal;
a processing time supported by the terminal;
a layer 2 buffer or soft buffer size supported by the terminal;
a packet data convergence protocol PDCP sequence number or a radio link control sequence number supported by the terminal;
the number of data radio bearers DRBs or the maximum number of DRBs supported by the terminal; and
a radio resource control RRC processing delay supported by the terminal.

Optionally, the system configuration information includes at least one of the following:
band information supported by a system;
band combination information supported by the system;
carrier information supported by the system;
system bandwidth;
channel bandwidth;
transmission bandwidth;
system frequency band information;
BWP configuration information; and
numerology related information.

Optionally, the second information includes at least one of the following:
an application scene of the terminal;
a network type of the terminal;
a network environment in which the terminal is located; and
a channel condition of the terminal.

Optionally, the processor 610 is configured to: if bandwidth corresponding to the first information is less than bandwidth corresponding to first system configuration information in the system configuration information, determine that a type corresponding to the terminal in the first system configuration information is a reduced capability terminal or a first type, and/or determine that capability information corresponding to the terminal in the first system configuration information is capability information corresponding to a reduced capability terminal; or
if bandwidth corresponding to the first information is less than bandwidth corresponding to at least one piece of first system configuration information in the system configuration information, determine that a type corresponding to the terminal in all or a part of the system configuration information is a reduced capability terminal or a first type, and/or determine that capability information corresponding to the terminal in all or a part of the system configuration information is capability information corresponding to a reduced capability terminal, where
the first system configuration information is one piece of system configuration information in the system configuration information, and the first type is a type corresponding to a reduced capability terminal.

Optionally, the processor 610 is configured to: if bandwidth corresponding to the first information is greater than or equal to bandwidth corresponding to first system configuration information in the system configuration information, determine that a type corresponding to the terminal in the first system configuration information is a common terminal or a second type, and/or determine that capability information corresponding to the terminal in the first system configuration information is capability information corresponding to a common terminal; or
if bandwidth corresponding to the first information is greater than or equal to bandwidth corresponding to first system configuration information in the system configuration information, determine that a type corresponding to the terminal in the first system configuration information is not a reduced capability terminal or a first type, and/or determine that capability information corresponding to the terminal in the first system configuration information is not capability information corresponding to a reduced capability terminal; or
if bandwidth corresponding to the first information is greater than or equal to bandwidth corresponding to at least one piece of first system configuration information in the system configuration information, determine that a type corresponding to the terminal in all or a part of the system configuration information is a common terminal or a second type, and/or determine that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, determine that a type corresponding to the terminal in all or a part of the system configuration information is not a reduced capability terminal or a first type, and/or determine that capability information corresponding to the terminal in all or a part of the system configuration information is not capability information corresponding to a reduced capability terminal, where
the first type is a type corresponding to a reduced capability terminal, and the second type is a type corresponding to a common terminal; and the first system configuration information is one piece of system configuration information in the system configuration information.

Optionally, the processor 610 is configured to: if a corresponding terminal type in at least one piece of first system configuration information in the system configuration information is a reduced capability terminal or a first type, determine that a type of the terminal is a reduced capability terminal or a first type, and/or determine that capability information of the terminal is capability information corresponding to a reduced capability terminal; or
if a corresponding terminal type in at least one piece of first system configuration information in the system configuration information is not a reduced capability terminal or a first type, determine that a type of the terminal is not a reduced capability terminal or a first type, and/or determine that capability information of the terminal is not capability information corresponding to a reduced capability terminal; or
if a corresponding terminal type in at least one piece of first system configuration information in the system configuration information is a common terminal or a second type, determine that a type of the terminal is a common terminal or a second type, and/or determine that capability information of the terminal is capability information corresponding to a common terminal, where
the first system configuration information is one piece of system configuration information in the system configuration information, the first type is a type corresponding to a reduced capability terminal, and the second type is a type corresponding to a common terminal.

Optionally, the processor 610 is configured to: if a corresponding terminal type in at least one piece of second system configuration information within a band combination is a reduced capability terminal or a first type, determine that a type corresponding to the terminal in the band combination is a reduced capability terminal or a first type, and/or determine that capability information corresponding to the terminal in the band combination is capability information corresponding to a reduced capability terminal; or
if a corresponding terminal type in at least one piece of second system configuration information within a band combination is not a reduced capability terminal or a first type, determine that a type corresponding to the terminal in the band combination is not a reduced capability terminal or a first type, and/or determine that capability information corresponding to the terminal in the band combination is not capability information corresponding to a reduced capability terminal; or
if a corresponding terminal type in at least one piece of second system configuration information within a band combination is a common terminal or a second type, determine that a type corresponding to the terminal in the band combination is a common terminal or a second type, and/or determine that capability information corresponding to the terminal in the band combination is capability information corresponding to a common terminal, where
the second system configuration information includes a bandwidth part, a carrier, a band, a frequency, a subcarrier spacing, or a numerology.

Optionally, the processor 610 is configured to: if a corresponding terminal type in at least one piece of third system configuration information within a frequency domain unit is a reduced capability terminal or a first type, determine that a type corresponding to the terminal in the frequency domain unit is a reduced capability terminal or a first type, and/or determine that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, determine that a type corresponding to the terminal in the frequency domain unit is not a reduced capability terminal or a first type, and/or determine that capability information corresponding to the terminal in the frequency domain unit is not capability information corresponding to a reduced capability terminal; or
if a corresponding terminal type in at least one piece of third system configuration information within a frequency domain unit is a common terminal or a second type, determine that a type corresponding to the terminal in the frequency domain unit is a common terminal or a second type, and/or determine that capability information corresponding to the terminal in the frequency domain unit is capability information corresponding to a common terminal, where
the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.

Optionally, the processor 610 is configured to: if a terminal type of the terminal in an uplink or a downlink is a reduced capability terminal or a first type, determine that a type of the terminal is a reduced capability terminal or a first type, and/or determine that a capability of the terminal is capability information corresponding to a reduced capability terminal; or
if neither a terminal type of the terminal in an uplink nor a terminal type of the terminal in a downlink is a reduced capability terminal or a first type, determine that a type of the terminal is not a reduced capability terminal or a first type, and/or determine that capability information of the terminal is not capability information corresponding to a reduced capability terminal; or
if neither a terminal type of the terminal in an uplink nor a terminal type of the terminal in a downlink is a reduced capability terminal or a first type, determining that a type of the terminal is a common terminal or a second type, and/or determining that capability information of the terminal is capability information corresponding to a common terminal.

Optionally, the radio frequency unit 601 is configured to: if bandwidth corresponding to the first information is less than bandwidth corresponding to first system configuration information in the system configuration information, report that a type corresponding to the terminal in the first system configuration information is a reduced capability terminal or a first type, and/or report that capability information corresponding to the terminal in the first system configuration information is capability information corresponding to a reduced capability terminal; or
if bandwidth corresponding to the first information is less than bandwidth corresponding to at least one piece of first system configuration information in the system configuration information, report that a type corresponding to the terminal in all or a part of the system configuration information is a reduced capability terminal or a first type, and/or report that capability information corresponding to the terminal in all or a part of the system configuration information is capability information corresponding to a reduced capability terminal, where
the first system configuration information is one piece of system configuration information in the system configuration information, and the first type is a type corresponding to a reduced capability terminal.

Optionally, the radio frequency unit 601 is configured to: if bandwidth corresponding to the first information is greater than or equal to bandwidth corresponding to first system configuration information in the system configuration information, report that a type corresponding to the terminal in the first system configuration information is a common terminal or a second type, and/or report that capability information corresponding to the terminal in the first system configuration information is capability information corresponding to a common terminal; or
if bandwidth corresponding to the first information is greater than or equal to bandwidth corresponding to first system configuration information in the system configuration information, report that a type corresponding to the terminal in the first system configuration information is not a reduced capability terminal or a first type, and/or report that capability information corresponding to the terminal to the first system configuration information is not capability information corresponding to a reduced capability terminal; or
if bandwidth corresponding to the first information is greater than or equal to bandwidth corresponding to at least one piece of first system configuration information in the system configuration information, report that a type corresponding to the terminal in all or a part of the system configuration information is a common terminal or a second type, and/or report that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, report that a type corresponding to the terminal in all or a part of the system configuration information is not a reduced capability terminal or a first type, and/or report that capability information corresponding to the terminal in all or a part of the system configuration information is not capability information corresponding to a reduced capability terminal, where
the first type is a type corresponding to a reduced capability terminal, and the second type is a type corresponding to a common terminal; and the first system configuration information is one piece of system configuration information in the system configuration information.

Optionally, the radio frequency unit 601 is configured to: if a corresponding terminal type in at least one piece of first system configuration information in the system configuration information is a reduced capability terminal or a first type, report that a type of the terminal is a reduced capability terminal or a first type, and/or report that capability information of the terminal is capability information corresponding to a reduced capability terminal; or
if a corresponding terminal type in at least one piece of first system configuration information in the system configuration information is not a reduced capability terminal or a first type, report that a type of the terminal is not a reduced capability terminal or a first type, and/or report that capability information of the terminal is not capability information corresponding to a reduced capability terminal; or
if a corresponding terminal type in at least one piece of first system configuration information in the system configuration information is a common terminal or a second type, report that a type of the terminal is a common terminal or a second type, and/or report that capability information of the terminal is capability information corresponding to a common terminal, where
the first system configuration information is one piece of system configuration information in the system configuration information, the first type is a type corresponding to a reduced capability terminal, and the second type is a type corresponding to a common terminal.

Optionally, the radio frequency unit 601 is configured to: if a corresponding terminal type in at least one piece of second system configuration information within a band combination is a reduced capability terminal or a first type, report that a type corresponding to the terminal in the band combination is a reduced capability terminal or a first type, and/or report that capability information corresponding to the terminal in the band combination is capability information corresponding to a reduced capability terminal; or
if a corresponding terminal type in at least one piece of second system configuration information within a band combination is not a reduced capability terminal or a first type, report that a type corresponding to the terminal in the band combination is not a reduced capability terminal or a first type, and/or report that capability information corresponding to the terminal in the band combination is not capability information corresponding to a reduced capability terminal; or
if a corresponding terminal type in at least one piece of second system configuration information within a band combination is a common terminal or a second type, report that a type corresponding to the terminal in the band combination is a common terminal or a second type, and/or report that capability information corresponding to the terminal in the band combination is capability information corresponding to a common terminal, where
the second system configuration information includes a bandwidth part, a carrier, a band, a frequency, a subcarrier spacing, or a numerology.

Optionally, the radio frequency unit 601 is configured to: if a corresponding terminal type in at least one piece of third system configuration information within a frequency domain unit is a reduced capability terminal or a first type, report that a type corresponding to the terminal in the frequency domain unit is a reduced capability terminal or a first type, and/or report that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, report that a type corresponding to the terminal in the frequency domain unit is not a reduced capability terminal or a first type, and/or report that capability information corresponding to the terminal in the frequency domain unit is not capability information corresponding to a reduced capability terminal; or
if a corresponding terminal type in at least one piece of third system configuration information within a frequency domain unit is a common terminal or a second type, report that a type corresponding to the terminal in the frequency domain unit is a common terminal or a second type, and/or report that capability information corresponding to the terminal in the frequency domain unit is capability information corresponding to a common terminal, where
the frequency domain unit is a band or a carrier, and when the frequency domain unit is a band, the third system configuration information includes a bandwidth part, a carrier, a frequency, a subcarrier spacing, or a numerical configuration; and when the frequency domain unit is a carrier, the third system configuration information includes a bandwidth part, a band, a frequency, a subcarrier spacing, or a numerology.

Optionally, the radio frequency unit 601 is configured to: if a terminal type of the terminal in an uplink or a downlink is a reduced capability terminal or a first type, report that a type of the terminal is a reduced capability terminal or a first type, and/or report that a capability of the terminal is capability information corresponding to a reduced capability terminal; or
if neither a terminal type of the terminal in an uplink nor a terminal type of the terminal in a downlink is a reduced capability terminal or a first type, report that a type of the terminal is not a reduced capability terminal or a first type, and/or report that capability information of the terminal is not capability information corresponding to a reduced capability terminal; or
if neither a terminal type of the terminal in an uplink nor a terminal type of the terminal in a downlink is a reduced capability terminal or a first type, report that a type of the terminal is a common terminal or a second type, and/or report that capability information of the terminal is capability information corresponding to a common terminal.

Optionally, the processor 610 is further configured to: if a first condition is met, control the radio frequency unit 601 not to report a reduced capability terminal type and/or not to report capability information corresponding to a reduced capability terminal, where
the first condition includes at least one of the following:
bandwidth corresponding to the first information is less than bandwidth corresponding to first system configuration information in the system configuration information;
bandwidth corresponding to the first information is less than bandwidth corresponding to at least one piece of first system configuration information in the system configuration information;
a corresponding terminal type in at least one piece of first system configuration information is not a reduced capability terminal or a first type;
a corresponding terminal type in at least one piece of second system configuration information within a band combination is not a reduced capability terminal or a first type;
a corresponding terminal type in at least one piece of third system configuration information within a frequency domain unit is not a reduced capability terminal or a first type;
neither a terminal type of the terminal in an uplink nor a terminal type of the terminal in a downlink is a reduced capability terminal or a first type, where
the first system configuration information is one piece of system configuration information in the system configuration information, the second system configuration information includes a bandwidth part, a carrier, a band, a frequency, a subcarrier spacing, or a numerology, the frequency domain unit is a band or a carrier, and the third system configuration information includes a bandwidth part, a carrier, a frequency, a subcarrier spacing, or a numerology, or the third system configuration information includes a bandwidth part, a band, a frequency, a subcarrier spacing, or a numerology.

Optionally, the target information is information corresponding to an uplink and/or a downlink.

The terminal in this embodiment of this application reports the first indication information, where the first indication information indicates whether the terminal is a reduced capability terminal. In this embodiment of this application, the terminal does not always report that the terminal type of the terminal is a reduced capability terminal. In some specific deployment scenes, it may be reported that the terminal type of the terminal is not a reduced capability terminal, thereby improving performance of a reduced capability terminal in different deployment scenes.

It should be noted that, the information obtaining method provided in the embodiments of this application may be performed by an information obtaining apparatus, or a control module that is in the information obtaining apparatus and that is configured to perform the information obtaining method. In the embodiments of this application, an example in which the information obtaining apparatus performs the information obtaining method is used to describe the information obtaining apparatus provided in the embodiments of this application.

As shown in FIG. 7, an embodiment of this application further provides an information obtaining apparatus 700, including:
a first obtaining module 701, configured to obtain first indication information, where the first indication information is used to indicate at least one of the following:
whether being a reduced capability terminal;
type identifier information of a terminal; and
capability information of a reduced capability terminal.

Optionally, the apparatus in this embodiment of this application further includes:
a second determining module, configured to determine a type of the terminal according to the first indication information.

Optionally, the first obtaining module is configured to obtain the first indication information in a first obtaining manner, where
the first obtaining manner includes at least one of the following:
obtaining the first indication information based on per-terminal;
obtaining the first indication information based on per-band;
obtaining the first indication information based on per-band combination;
obtaining the first indication information based on per-carrier;
obtaining the first indication information based on per-bandwidth part;
obtaining the first indication information based on per-feature;
obtaining the first indication information based on per-feature set;
obtaining the first indication information based on per-subcarrier spacing;
obtaining the first indication information based on per-numerology; and
obtaining the first indication information based on an uplink or a downlink.

Optionally, the first indication information is included in at least one of the following messages:
message 1 in a random access process;
message 3 in a random access process;
message 5 in a random access process;
a capability reporting message of the terminal; and
a type reporting message of the terminal.

In this embodiment of this application, the first indication information indicates whether the terminal is a reduced capability terminal, and the terminal does not always report that the terminal type of the terminal is a reduced capability terminal. In some specific deployment scenes, it may be reported that the terminal type of the terminal is not a reduced capability terminal, so that a network side device may use the terminal as a common terminal for corresponding processing, thereby improving performance of a reduced capability terminal in different deployment scenes.

An embodiment of this application further provides a network side device, including a processor and a communication interface, where the communication interface is configured to obtain first indication information, where the first indication information is used to indicate at least one of the following:
whether being a reduced capability terminal;
type identifier information of a terminal; and
capability information of a reduced capability terminal.

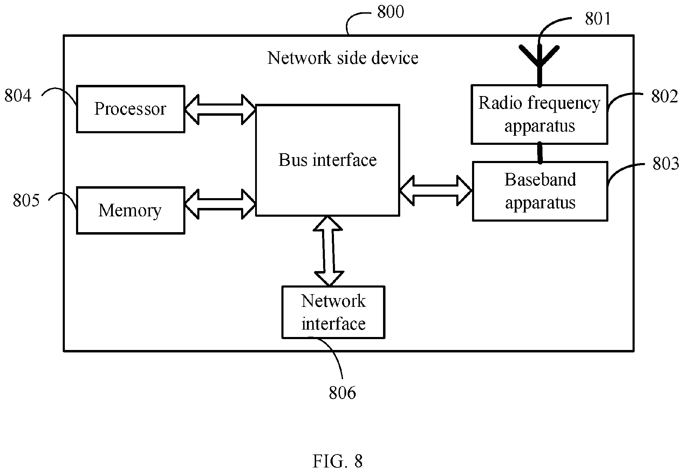

Specifically, an embodiment of this application further provides a network side device. As shown in FIG. 8, a network side device 800 includes an antenna 801, a radio frequency apparatus 802, and a baseband apparatus 803. The antenna 801 is connected to the radio frequency apparatus 802. In an uplink direction, the radio frequency apparatus 802 receives information by using the antenna 801, and sends the received information to the baseband apparatus 803 for processing. In a downlink direction, the baseband apparatus 803 processes information that needs to be sent, and sends processed information to the radio frequency apparatus 802. The radio frequency apparatus 802 processes the received information, and sends processed information by using the antenna 901.

The frequency band processing apparatus may be located in the baseband apparatus 803. The method performed by the network side device in the foregoing embodiment may be implemented in the baseband apparatus 803. The baseband apparatus 803 includes a processor 804 and a memory 805.

The baseband apparatus 803 may include, for example, at least one baseband board, where a plurality of chips are disposed on the baseband board. As shown in FIG. 8, one chip is, for example, the processor 804, which is connected to the memory 805, so as to invoke a program in the memory 805 to perform operations of the network side device shown in the foregoing method embodiment.

The baseband apparatus 803 may further include a network interface 806, configured to exchange information with the radio frequency apparatus 802. For example, the interface is a common public radio interface (common public radio interface, CPRI).

Specifically, the network side device in this embodiment of the present invention further includes an instruction or a program that is stored in the memory 805 and that can be run on the processor 804. The processor 804 invokes the instruction or the program in the memory 805 to perform the method performed by the modules shown in FIG. 7, and a same technical effect is achieved. To avoid repetition, details are not described herein again.

An embodiment of this application further provides a readable storage medium. The readable storage medium stores a program or an instruction, and the program or the instruction is executed by a processor to implement the processes of the foregoing information obtaining method or information transmission method embodiment, and a same technical effect can be achieved. To avoid repetition, details are not described herein again.

The processor is a processor in the terminal in the foregoing embodiment. The readable storage medium includes a computer-readable storage medium, such as a computer read-only memory (Read-Only Memory, ROM), a random access memory (Random Access Memory, RAM), a magnetic disk, or an optical disc.

An embodiment of this application further provides a chip. The chip includes a processor and a communication interface, the communication interface is coupled to the processor, and the processor is configured to run a program or an instruction to implement the processes of the foregoing information obtaining method or information transmission method embodiment, and a same technical effect can be achieved. To avoid repetition, details are not described herein again.

It should be understood that the chip mentioned in this embodiment of this application may also be referred to as a system-level chip, a system chip, a chip system, or an on-chip system chip.

An embodiment of this application further provides a communication device. The communication device is configured to perform the processes of the foregoing information obtaining method or information transmission method embodiment, and a same technical effect can be achieved. To avoid repetition, details are not described herein again.

It should be noted that, in this specification, the terms "include", "comprise", or their any other variant is intended to cover a non-exclusive inclusion, so that a process, a method, an article, or an apparatus that includes a list of elements not only includes those elements but also includes other elements which are not expressly listed, or further includes elements inherent to such process, method, article, or apparatus. An element limited by "including a ..." does not, without more constraints, preclude the presence of additional identical elements in the process, method, article, or apparatus that includes the element. In addition, it should be noted that the scope of the method and the apparatus in the embodiments of this application is not limited to performing functions in an illustrated or discussed sequence, and may further include performing functions in a basically simultaneous manner or in a reverse sequence according to the functions concerned. For example, the described method may be performed in an order different from that described, and the steps may be added, omitted, or combined. In addition, features described with reference to some examples may be combined in other examples.

Based on the descriptions of the foregoing implementations, a person skilled in the art may clearly understand that the method in the foregoing embodiment may be implemented by software in addition to a necessary universal hardware platform or by hardware only. In most circumstances, the former is a preferred implementation. Based on such an understanding, the technical solutions of this application essentially or the part contributing to the prior art may be implemented in a form of a computer software product. The computer software product is stored in a storage medium (such as a ROM/RAM, a hard disk, or an optical disc), and includes several instructions for instructing a terminal (which may be mobile phone, a computer, a server, a network device, or the like) to perform the methods described in the embodiments of this application.

The embodiments of this application are described above with reference to the accompanying drawings, but this application is not limited to the above specific implementations, and the above specific implementations are only illustrative and not restrictive. Under the enlightenment of this application, those of ordinary skill in the art can make many forms without departing from the purpose of this application and the protection scope of the claims, all of which fall within the protection of this application.

## Claims

1. An information transmission method, comprising:
reporting, by a terminal, first indication information, wherein the first indication information is used to indicate at least one of the following:
whether being a reduced capability terminal;
type identifier information of a terminal; and
capability information of a reduced capability terminal.

2. The method according to claim 1, wherein the reporting, by a terminal, first indication information comprises:
reporting, by the terminal, the first indication information in a first reporting manner, wherein
the first reporting manner comprises at least one of the following:
reporting the first indication information based on per-terminal;
reporting the first indication information based on per-band;
reporting the first indication information based on per-band combination;
reporting the first indication information based on per-carrier;
reporting the first indication information based on per-bandwidth part;
reporting the first indication information based on per-feature;
reporting the first indication information based on per-feature set;
reporting the first indication information based on per-subcarrier spacing;
reporting the first indication information based on per-numerology; and
reporting the first indication information based on an uplink or a downlink.

3. The method according to claim 1, wherein the first indication information is comprised in at least one of the following messages:
message 1 in a random access process;
message 3 in a random access process;
message 5 in a random access process;
a capability reporting message of the terminal; and
a type reporting message of the terminal.

4. The method according to claim 1, wherein before the reporting, by a terminal, first indication information, the method further comprises:
determining, by the terminal, the first indication information according to target information, wherein the target information comprises at least system configuration information and/or second information, and the second information is used to indicate a state and/or a scene of the terminal.

5. The method according to claim 1, wherein the reporting, by a terminal, first indication information comprises:
reporting, by the terminal, the first indication information according to target information, wherein the target information comprises at least system configuration information and/or second information, and the second information is used to indicate a state and/or a scene of the terminal.

6. The method according to claim 4 or 5, wherein the target information further comprises:
first information, wherein the first information is used to indicate a capability and/or an attribute parameter of the terminal.

7. The method according to claim 6, wherein the first information comprises at least one of the following:
bandwidth or maximum bandwidth supported by the terminal;
the number of receive/transmit antennas or the maximum number of receive/transmit antennas supported by the terminal;
the number of multiple input multiple output MIMO layers or the maximum number of MIMO layers supported by the terminal;
a maximum rate supported by the terminal;
a modulation order or a maximum modulation order supported by the terminal;
half-duplex frequency division duplex Half Duplex FDD supported by the terminal;
a processing time supported by the terminal;
a layer 2 buffer or soft buffer size supported by the terminal;
a packet data convergence protocol PDCP sequence number or a radio link control sequence number supported by the terminal;
the number of data radio bearers DRBs or the maximum number of DRBs supported by the terminal; and
a radio resource control RRC processing delay supported by the terminal.

8. The method according to claim 4 or 5, wherein the system configuration information comprises at least one of the following:
band information supported by a system;
band combination information supported by the system;
carrier information supported by the system;
system bandwidth;
channel bandwidth;
transmission bandwidth;
system frequency band information;
BWP configuration information; and
numerology related information.

9. The method according to claim 4 or 5, wherein the second information comprises at least one of the following:
an application scene of the terminal;
a network type of the terminal;
a network environment in which the terminal is located; and
a channel condition of the terminal.

10. The method according to claim 6, wherein the determining the first indication information comprises:
if bandwidth corresponding to the first information is less than bandwidth corresponding to first system configuration information in the system configuration information, determining that a type corresponding to the terminal in the first system configuration information is a reduced capability terminal or a first type, and/or determining that capability information corresponding to the terminal in the first system configuration information is capability information corresponding to a reduced capability terminal; or
if bandwidth corresponding to the first information is less than bandwidth corresponding to at least one piece of first system configuration information in the system configuration information, determining that a type corresponding to the terminal in all or a part of the system configuration information is a reduced capability terminal or a first type, and/or determining that capability information corresponding to the terminal in all or a part of the system configuration information is capability information corresponding to a reduced capability terminal, wherein
the first system configuration information is one piece of system configuration information in the system configuration information, and the first type is a type corresponding to a reduced capability terminal.

11. The method according to claim 6, wherein the determining the first indication information comprises:
if bandwidth corresponding to the first information is greater than or equal to bandwidth corresponding to first system configuration information in the system configuration information, determining that a type corresponding to the terminal in the first system configuration information is a common terminal or a second type, and/or determining that capability information corresponding to the terminal in the first system configuration information is capability information corresponding to a common terminal; or
if bandwidth corresponding to the first information is greater than or equal to bandwidth corresponding to first system configuration information in the system configuration information, determining that a type corresponding to the terminal in the first system configuration information is not a reduced capability terminal or a first type, and/or determining that capability information corresponding to the terminal in the first system configuration information is not capability information corresponding to a reduced capability terminal; or
if bandwidth corresponding to the first information is greater than or equal to bandwidth corresponding to at least one piece of first system configuration information in the system configuration information, determining that a type corresponding to the terminal in all or a part of the system configuration information is a common terminal or a second type, and/or determining that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, determining that a type corresponding to the terminal in all or a part of the system configuration information is not a reduced capability terminal or a first type, and/or determining that capability information corresponding to the terminal in all or a part of the system configuration information is not capability information corresponding to a reduced capability terminal, wherein
the first type is a type corresponding to a reduced capability terminal, and the second type is a type corresponding to a common terminal; and the first system configuration information is one piece of system configuration information in the system configuration information.

12. The method according to claim 4, wherein the determining the first indication information comprises:
if a corresponding terminal type in at least one piece of first system configuration information in the system configuration information is a reduced capability terminal or a first type, determining that a type of the terminal is a reduced capability terminal or a first type, and/or determining that capability information of the terminal is capability information corresponding to a reduced capability terminal; or
if a corresponding terminal type in at least one piece of first system configuration information in the system configuration information is not a reduced capability terminal or a first type, determining that a type of the terminal is not a reduced capability terminal or a first type, and/or determining that capability information of the terminal is not capability information corresponding to a reduced capability terminal; or
if a corresponding terminal type in at least one piece of first system configuration information in the system configuration information is a common terminal or a second type, determining that a type of the terminal is a common terminal or a second type, and/or determining that capability information of the terminal is capability information corresponding to a common terminal, wherein
the first system configuration information is one piece of system configuration information in the system configuration information, the first type is a type corresponding to a reduced capability terminal, and the second type is a type corresponding to a common terminal.

13. The method according to claim 4, wherein the determining the first indication information comprises:
if a corresponding terminal type in at least one piece of second system configuration information within a band combination is a reduced capability terminal or a first type, determining that a type corresponding to the terminal in the band combination is a reduced capability terminal or a first type, and/or determining that capability information corresponding to the terminal in the band combination is capability information corresponding to a reduced capability terminal; or
if a corresponding terminal type in at least one piece of second system configuration information within a band combination is not a reduced capability terminal or a first type, determining that a type corresponding to the terminal in the band combination is not a reduced capability terminal or a first type, and/or determining that capability information corresponding to the terminal in the band combination is not capability information corresponding to a reduced capability terminal; or
if a corresponding terminal type in at least one piece of second system configuration information within a band combination is a common terminal or a second type, determining that a type corresponding to the terminal in the band combination is a common terminal or a second type, and/or determining that capability information corresponding to the terminal in the band combination is capability information corresponding to a common terminal, wherein
the second system configuration information comprises a bandwidth part, a carrier, a band, a frequency, a subcarrier spacing, or a numerology.

14. The method according to claim 4, wherein the determining the first indication information comprises:
if a corresponding terminal type in at least one piece of third system configuration information within a frequency domain unit is a reduced capability terminal or a first type, determining that a type corresponding to the terminal in the frequency domain unit is a reduced capability terminal or a first type, and/or determining that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, determining that a type corresponding to the terminal in the frequency domain unit is not a reduced capability terminal or a first type, and/or determining that capability information corresponding to the terminal in the frequency domain unit is not capability information corresponding to a reduced capability terminal; or
if a corresponding terminal type in at least one piece of third system configuration information within a frequency domain unit is a common terminal or a second type, determining that a type corresponding to the terminal in the frequency domain unit is a common terminal or a second type, and/or determining that capability information corresponding to the terminal in the frequency domain unit is capability information corresponding to a common terminal, wherein
the frequency domain unit is a band or a carrier, and when the frequency domain unit is a band, the third system configuration information comprises a bandwidth part, a carrier, a frequency, a subcarrier spacing, or a numerical configuration; and when the frequency domain unit is a carrier, the third system configuration information comprises a bandwidth part, a band, a frequency, a subcarrier spacing, or a numerology.

15. The method according to claim 4, wherein the determining the first indication information comprises:
if a terminal type of the terminal in an uplink or a downlink is a reduced capability terminal or a first type, determining that a type of the terminal is a reduced capability terminal or a first type, and/or determining that a capability of the terminal is capability information corresponding to a reduced capability terminal; or
if neither a terminal type of the terminal in an uplink nor a terminal type of the terminal in a downlink is a reduced capability terminal or a first type, determining that a type of the terminal is not a reduced capability terminal or a first type, and/or determining that capability information of the terminal is not capability information corresponding to a reduced capability terminal; or
if neither a terminal type of the terminal in an uplink nor a terminal type of the terminal in a downlink is a reduced capability terminal or a first type, determining that a type of the terminal is a common terminal or a second type, and/or determining that capability information of the terminal is capability information corresponding to a common terminal.

16. The method according to claim 6, wherein the reporting the first indication information comprises:
if bandwidth corresponding to the first information is less than bandwidth corresponding to first system configuration information in the system configuration information, reporting that a type corresponding to the terminal in the first system configuration information is a reduced capability terminal or a first type, and/or reporting that capability information corresponding to the terminal in the first system configuration information is capability information corresponding to a reduced capability terminal; or
if bandwidth corresponding to the first information is less than bandwidth corresponding to at least one piece of first system configuration information in the system configuration information, reporting that a type corresponding to the terminal in all or a part of the system configuration information is a reduced capability terminal or a first type, and/or reporting that capability information corresponding to the terminal in all or a part of the system configuration information is capability information corresponding to a reduced capability terminal, wherein
the first system configuration information is one piece of system configuration information in the system configuration information, and the first type is a type corresponding to a reduced capability terminal.

17. The method according to claim 6, wherein the reporting the first indication information comprises:
if bandwidth corresponding to the first information is greater than or equal to bandwidth corresponding to first system configuration information in the system configuration information, reporting that a type corresponding to the terminal in the first system configuration information is a common terminal or a second type, and/or reporting that capability information corresponding to the terminal in the first system configuration information is capability information corresponding to a common terminal; or
if bandwidth corresponding to the first information is greater than or equal to bandwidth corresponding to first system configuration information in the system configuration information, reporting that a type corresponding to the terminal in the first system configuration information is not a reduced capability terminal or a first type, and/or reporting that capability information corresponding to the terminal to the first system configuration information is not capability information corresponding to a reduced capability terminal; or
if bandwidth corresponding to the first information is greater than or equal to bandwidth corresponding to at least one piece of first system configuration information in the system configuration information, reporting that a type corresponding to the terminal in all or a part of the system configuration information is a common terminal or a second type, and/or reporting that capability information corresponding to the terminal in all or a part of the system configuration information is capability information corresponding to a common terminal; or
if first bandwidth corresponding to the first information is greater than or equal to bandwidth corresponding to at least one piece of first system configuration information in the system configuration information, reporting that a type corresponding to the terminal in all or a part of the system configuration information is not a reduced capability terminal or a first type, and/or reporting that capability information corresponding to the terminal in all or a part of the system configuration information is not capability information corresponding to a reduced capability terminal, wherein
the first type is a type corresponding to a reduced capability terminal, and the second type is a type corresponding to a common terminal; and the first system configuration information is one piece of system configuration information in the system configuration information.

18. The method according to claim 5, wherein the reporting the first indication information comprises:
if a corresponding terminal type in at least one piece of first system configuration information in the system configuration information is a reduced capability terminal or a first type, reporting that a type of the terminal is a reduced capability terminal or a first type, and/or reporting that capability information of the terminal is capability information corresponding to a reduced capability terminal; or
if a corresponding terminal type in at least one piece of first system configuration information in the system configuration information is not a reduced capability terminal or a first type, reporting that a type of the terminal is not a reduced capability terminal or a first type, and/or reporting that capability information of the terminal is not capability information corresponding to a reduced capability terminal; or
if a corresponding terminal type in at least one piece of first system configuration information in the system configuration information is a common terminal or a second type, reporting that a type of the terminal is a common terminal or a second type, and/or reporting that capability information of the terminal is capability information corresponding to a common terminal, wherein
the first system configuration information is one piece of system configuration information in the system configuration information, the first type is a type corresponding to a reduced capability terminal, and the second type is a type corresponding to a common terminal.

19. The method according to claim 5, wherein the reporting the first indication information comprises:
if a corresponding terminal type in at least one piece of second system configuration information within a band combination is a reduced capability terminal or a first type, reporting that a type corresponding to the terminal in the band combination is a reduced capability terminal or a first type, and/or reporting that capability information corresponding to the terminal in the band combination is capability information corresponding to a reduced capability terminal; or
if a corresponding terminal type in at least one piece of second system configuration information within a band combination is not a reduced capability terminal or a first type, reporting that a type corresponding to the terminal in the band combination is not a reduced capability terminal or a first type, and/or reporting that capability information corresponding to the terminal in the band combination is not capability information corresponding to a reduced capability terminal; or
if a corresponding terminal type in at least one piece of second system configuration information within a band combination is a common terminal or a second type, reporting that a type corresponding to the terminal in the band combination is a common terminal or a second type, and/or reporting that capability information corresponding to the terminal in the band combination is capability information corresponding to a common terminal, wherein
the second system configuration information comprises a bandwidth part, a carrier, a band, a frequency, a subcarrier spacing, or a numerology.

20. The method according to claim 5, wherein the reporting the first indication information comprises:
if a corresponding terminal type in at least one piece of third system configuration information within a frequency domain unit is a reduced capability terminal or a first type, reporting that a type corresponding to the terminal in the frequency domain unit is a reduced capability terminal or a first type, and/or reporting that capability information corresponding to the terminal in the frequency domain unit is capability information corresponding to a reduced capability terminal; or
if a corresponding terminal type in at least one piece of third system configuration information within a frequency domain unit is not a reduced capability terminal or a first type, reporting that a type corresponding to the terminal in the frequency domain unit is not a reduced capability terminal or a first type, and/or reporting that capability information corresponding to the terminal in the frequency domain unit is not capability information corresponding to a reduced capability terminal; or
if a corresponding terminal type in at least one piece of third system configuration information within a frequency domain unit is a common terminal or a second type, reporting that a type corresponding to the terminal in the frequency domain unit is a common terminal or a second type, and/or reporting that capability information corresponding to the terminal in the frequency domain unit is capability information corresponding to a common terminal, wherein
the frequency domain unit is a band or a carrier, and when the frequency domain unit is a band, the third system configuration information comprises a bandwidth part, a carrier, a frequency, a subcarrier spacing, or a numerical configuration; and when the frequency domain unit is a carrier, the third system configuration information comprises a bandwidth part, a band, a frequency, a subcarrier spacing, or a numerology.

21. The method according to claim 5, wherein the reporting the first indication information comprises:
if a terminal type of the terminal in an uplink or a downlink is a reduced capability terminal or a first type, reporting that a type of the terminal is a reduced capability terminal or a first type, and/or reporting that a capability of the terminal is capability information corresponding to a reduced capability terminal; or
if neither a terminal type of the terminal in an uplink nor a terminal type of the terminal in a downlink is a reduced capability terminal or a first type, reporting that a type of the terminal is not a reduced capability terminal or a first type, and/or reporting that capability information of the terminal is not capability information corresponding to a reduced capability terminal; or
if neither a terminal type of the terminal in an uplink nor a terminal type of the terminal in a downlink is a reduced capability terminal or a first type, reporting that a type of the terminal is a common terminal or a second type, and/or reporting that capability information of the terminal is capability information corresponding to a common terminal.

22. The method according to claim 6, further comprising:
if a first condition is met, not reporting a reduced capability terminal type and/or not reporting capability information corresponding to a reduced capability terminal, wherein
the first condition comprises at least one of the following:
bandwidth corresponding to the first information is less than bandwidth corresponding to first system configuration information in the system configuration information;
bandwidth corresponding to the first information is less than bandwidth corresponding to at least one piece of first system configuration information in the system configuration information;
a corresponding terminal type in at least one piece of first system configuration information is not a reduced capability terminal or a first type;
a corresponding terminal type in at least one piece of second system configuration information within a band combination is not a reduced capability terminal or a first type;
a corresponding terminal type in at least one piece of third system configuration information within a frequency domain unit is not a reduced capability terminal or a first type;
neither a terminal type of the terminal in an uplink nor a terminal type of the terminal in a downlink is a reduced capability terminal or a first type, wherein
the first system configuration information is one piece of system configuration information in the system configuration information, the second system configuration information comprises a bandwidth part, a carrier, a band, a frequency, a subcarrier spacing, or a numerology, the frequency domain unit is a band or a carrier, and the third system configuration information comprises a bandwidth part, a carrier, a frequency, a subcarrier spacing, or a numerology, or the third system configuration information comprises a bandwidth part, a band, a frequency, a subcarrier spacing, or a numerology.

23. The method according to claim 4 or 5, wherein the target information is information corresponding to an uplink and/or a downlink.

24. An information obtaining method, comprising:
obtaining, by a network side device, first indication information, wherein the first indication information is used to indicate at least one of the following:
whether being a reduced capability terminal;
type identifier information of a terminal; and
capability information of a reduced capability terminal.

25. The method according to claim 24, wherein the obtaining, by a network side device, first indication information comprises:
obtaining, by the network side device, the first indication information in a first obtaining manner, wherein
the first obtaining manner comprises at least one of the following:
obtaining the first indication information based on per-terminal;
obtaining the first indication information based on per-band;
obtaining the first indication information based on per-band combination;
obtaining the first indication information based on per-carrier;
obtaining the first indication information based on per-bandwidth part;
obtaining the first indication information based on per-feature;
obtaining the first indication information based on per-feature set;
obtaining the first indication information based on per-subcarrier spacing;
obtaining the first indication information based on per-numerology; and
obtaining the first indication information based on an uplink or a downlink.

26. The method according to claim 24, wherein the first indication information is comprised in at least one of the following messages:
message 1 in a random access process;
message 3 in a random access process;
message 5 in a random access process;
a capability reporting message of the terminal; and
a type reporting message of the terminal.

27. An information transmission apparatus, comprising:
a first reporting module, configured to report first indication information, wherein the first indication information is used to indicate at least one of the following:
whether being a reduced capability terminal;
type identifier information of a terminal; and
capability information of a reduced capability terminal.

28. The apparatus according to claim 27, wherein the first reporting module is configured to report the first indication information in a first reporting manner, wherein
the first reporting manner comprises at least one of the following:
reporting the first indication information based on per-terminal;
reporting the first indication information based on per-band;
reporting the first indication information based on per-band combination;
reporting the first indication information based on per-carrier;
reporting the first indication information based on per-bandwidth part;
reporting the first indication information based on per-feature;
reporting the first indication information based on per-feature set;
reporting the first indication information based on per-subcarrier spacing;
reporting the first indication information based on per-numerology; and
reporting the first indication information based on an uplink or a downlink.

29. The apparatus according to claim 27, wherein the first indication information is comprised in at least one of the following messages:
message 1 in a random access process;
message 3 in a random access process;
message 5 in a random access process;
a capability reporting message of the terminal; and
a type reporting message of the terminal.

30. The apparatus according to claim 27, further comprising:
a first determining module, configured to: before the first reporting module reports the first indication information, determine the first indication information according to target information, wherein the target information comprises at least system configuration information and/or second information, and the second information is used to indicate a state and/or a scene of the terminal.

31. The apparatus according to claim 27, wherein the first reporting module is configured to report the first indication information according to target information, wherein the target information comprises at least system configuration information and/or second information, and the second information is used to indicate a state and/or a scene of the terminal.

32. The apparatus according to claim 30 or 31, wherein the target information further comprises:
first information, wherein the first information is used to indicate a capability and/or an attribute parameter of the terminal.

33. An information obtaining apparatus, comprising:
a first obtaining module, configured to obtain first indication information, wherein the first indication information is used to indicate at least one of the following:
whether being a reduced capability terminal;
type identifier information of a terminal; and
capability information of a reduced capability terminal.

34. The apparatus according to claim 33, wherein the first obtaining module is configured to obtain the first indication information in a first obtaining manner, wherein
the first obtaining manner comprises at least one of the following:
obtaining the first indication information based on per-terminal;
obtaining the first indication information based on per-band;
obtaining the first indication information based on per-band combination;
obtaining the first indication information based on per-carrier;
obtaining the first indication information based on per-bandwidth part;
obtaining the first indication information based on per-feature;
obtaining the first indication information based on per-feature set;
obtaining the first indication information based on per-subcarrier spacing;
obtaining the first indication information based on per-numerology; and
obtaining the first indication information based on an uplink or a downlink.

35. A terminal, comprising a processor, a memory, and a program or an instruction that is stored in the memory and that can be run on the processor, wherein the program or the instruction is executed by the processor to implement the steps of the information transmission method according to any one of claims 1 to 23.

36. A network side device, comprising a processor, a memory, and a program or an instruction that is stored in the memory and that can be run on the processor, wherein the program or the instruction is executed by the processor to implement the steps of the information obtaining method according to any one of claims 24 to 26.

37. A readable storage medium, wherein the readable storage medium stores a program or an instruction, and the program or the instruction is executed by a processor to implement the steps of the information transmission method according to any one of claims 1 to 23, or the steps of the information obtaining method according to any one of claims 24 to 26.

38. A chip, comprising a processor and a communication interface, wherein the communication interface is coupled to the processor, and the processor is configured to run a program or an instruction to implement the steps of the information transmission method according to any one of claims 1 to 23, or the steps of the information obtaining method according to any one of claims 24 to 26.

39. A computer program product, wherein the program product is stored in a non-transient storage medium, and the program product is executed by at least one processor to implement the steps of the information transmission method according to any one of claims 1 to 23, or the steps of the information obtaining method according to any one of claims 24 to 26.

40. A communication device, configured to perform the information transmission method according to any one of claims 1 to 23, or the information obtaining method according to any one of claims 24 to 26.
